# FASCICULE DE BREVET EUROPEEN

(11) **EP 4 348 363 B1**
(45) Date de publication et mention de la délivrance du brevet: **14.10.2026**
(21) Numéro de dépôt: 22734162.5
(22) Date de dépôt: 31.05.2022
(51) Int. Cl.: G05B 19/404, G05B 19/401, B23B 31/36, G04D 7/00, G04D 3/02

(54) **MACHINE D'USINAGE D'UNE PIÈCE MICROMECANIQUE ET PROCÉDÉ D'USINAGE MIS EN OEUVRE PAR LADITE MACHINE**
MASCHINE ZUR BEARBEITUNG EINES MIKROMECHANISCHEN WERKSTÜCKS UND BEARBEITUNGSVERFAHREN, DAS VON DIESER MASCHINE ANGEWENDET WIRD
MACHINING TOOL FOR A MICROMECHANICAL PART AND METHOD IMPLEMENTED BY SAID MACHINE

(30) Priorité: 31.05.2021 EP 21176764
(43) Date de publication de la demande: 10.04.2024
(60) Demande divisionnaire: 26203245.1
(73) Titulaire: Petitpierre SA, 2016 Cortaillod (CH)
(72) Inventeur: JACOT, Philippe, 2022 Bevaix (CH); CALDERON, Ivan, 2014 Bôle (CH)
(74) Mandataire: Bovard SA Neuchâtel
(86) Numéro de dépôt international: PCT/EP2022/064698
(87) Numéro de publication internationale: WO 2022/253801

(56) Documents cités:
- EP-A2- 1 226 899
- US-A1- 2007 027 571
- US-A1- 2020 292 996
- WARHANEK MAXIMILIAN ET AL: "Accurate Micro-Tool Manufacturing by Iterative Pulsed-Laser Ablation", vol. 4, no. 4, 23 October 2017 (2017-10-23), pages 193 - 204, XP055857312, ISSN: 2196-7229, Retrieved from the Internet <URL:http://link.springer.com/content/pdf/10.1007/s40516-017-0046-y.pdf> DOI: 10.1007/s40516-017-0046-y

## Description

### Domaine technique

La présente invention concerne une machine d'usinage d'une pièce, notamment une pièce micromécanique, présentant au moins une surface de révolution d'axe de rotation A, ladite machine d'usinage comprenant des moyens d'usinage de précision sans force agencés pour usiner la pièce, un tour comprenant au moins une première broche présentant un axe de rotation B s'étendant selon l'axe Z dans un repère XYZ, ladite première broche étant mobile en translation selon l'axe Z et en rotation autour de son axe de rotation B, un premier dispositif de serrage agencé pour serrer la pièce à usiner et la monter sur la première broche, un premier système de mesure optique de la pièce intégré à la première broche et agencé pour au moins mesurer les dimensions réelles de la pièce lorsqu'elle est montée sur la première broche au moyen du premier dispositif de serrage, et un système de pilotage agencé pour gérer des paramètres d'usinage, le système de pilotage comprenant :
- des moyens d'enregistrement de dimensions finales prédéterminées de la pièce à atteindre après usinage avec une tolérance prédéfinie,
- des moyens de commande du premier système de mesure optique pour mesurer et enregistrer des dimensions réelles de la pièce montée sur la première broche,
- des moyens de comparaison des dimensions réelles mesurées de la pièce avec au moins les dimensions finales prédéterminées,
- des moyens de correction pour adapter les paramètres d'usinage en fonction de la comparaison des dimensions réelles mesurées de la pièce avec au moins les dimensions finales prédéterminées,
- des moyens de commande des moyens d'usinage de précision sans force pour usiner la pièce en fonction des paramètres d'usinage.

La présente invention concerne également un procédé d'usinage d'une pièce, notamment une pièce micromécanique, mis en œuvre par ladite machine d'usinage.

### Etat de la technique

De telles pièces, notamment des pièces micromécaniques, peuvent être par exemple des axes de précision pouvant être de très petites dimensions comme des pivots d'horlogerie, tels que des axes de balancier par exemple, mettant en jeu de très petits diamètres, jusqu'à 60 microns ou moins.

Traditionnellement, les machines de tournage par usinage sans force ou sans effort, tels que tournage par laser femto seconde, tournage par électroérosion ou tournage par procédé électrochimique sont pilotées de manière standard, c'est-à-dire que les pièces sont usinées puis extraites de la zone d'usinage et mesurées.

Les résultats des mesures servent à corriger les paramètres d'usinage de la machine afin d'obtenir les dimensions des pièces dans les tolérances désirées.

De ce fait, lorsque l'on procède de la sorte, un défaut d'usinage n'est détecté qu'après coup relativement longtemps après que la pièce a été complètement usinée.

L'état de la machine d'usinage aura alors toutes les chances d'avoir évolué (en termes de dilatation thermique ou autres facteurs responsables de dérive), rendant la correction de la machine d'usinage sur la base de la mesure de la pièce relativement inexacte voir erronée.

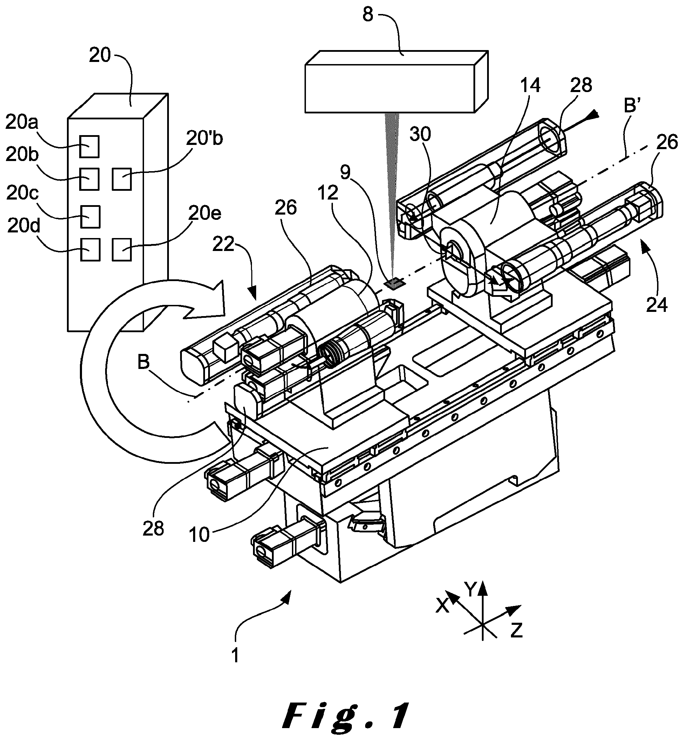

La publication de Warhanek et al. « Accurate Micro-Tool Manufacturing by Iterative Pulsed-Laser Ablation », Lasers in Manufacturing and Materials Processing, vol. 4, no. 4, 23 octobre2017 (2017-10-23), pages 193-204, XP055857312, ISSN: 2196-7229, DOI: 10.1 007/s4051 6-01 7-0046-y ; Extrait de l'Internet: URL:http://link.springer.com/content/pdf/1 0.1 007/s4051 6-01 7-0046-y.pdf décrit un procédé et une machine prototype pour la fabrication d'outils de coupe de diamètre compris entre 0.5 mm et 1.5 mm, ces outils étant réalisés dans des matériaux spécifiques tels que cBN ou WC. La machine utilise un nano-laser. La figure 1 montre la forte non-linéarité quant aux déviations par rapport au diamètre recherché pour deux lasers différents, nanoseconde et picoseconde. Cela montre qu'il n'est pas possible pour l'homme du métier de déduire une quelconque corrélation liée entre deux durées d'impulsion de différents lasers et leur performance ou efficacité en termes d'enlèvement de matière. Les résultats entre le nanolaser et le picolaser ne sont pas transposables.

De plus, ce document propose un procédé de correction itérative, basé sur des démarches modélisées ou itératives à partir d'un algorithme, et sur l'utilisation d'une carte de compensation avec une régulation en continu du laser qui se repositionne constamment. Un tel procédé est complexe à mettre en œuvre en milieu industriel. De plus, il permet d'obtenir des tolérances de profil et de diamètre de l'ordre de 5µm, des rugosités Ra de l'ordre de 55 nm, ce qui n'est pas suffisant dans le domaine horloger.

Le document EP 1 226 899 décrit un procédé et une machine d'usinage qui comprend notamment un poste de mesure et d'alignement, un premier poste de traitement et un second poste de traitement, le poste de mesure et d'alignement étant localisé à un endroit différent de celui des premier et second poste de traitement. Cela a pour inconvénient que la pièce doit être transférée entre le poste de mesure et d'alignement et le premier ou second poste de traitement. Cette opération de transfert de la pièce fait perdre de nombreux microns de précision.

D'autre part, traditionnellement, les axes de précision usinés par tournage (y compris tournage par usinage sans effort, tels que tournage par laser femto seconde, tournage par électroérosion ou tournage par procédé électrochimique) à partir de lopins ou d'ébauches utilisent des broches et des contre-broches de tournage traditionnelles munies de serrages par pince, par mandrin, ou par d'autres types de serrage existants. Ces types de serrage de reprise ne permettent pas de garantir un haut niveau de concentricité des usinages de reprise. Des contre-pointes peuvent être utilisées pour améliorer l'usinage, mais ces dernières ne sont en principe pas utilisables dans le cas de très petites pièces. On est alors obligé d'usiner la pièce entière en un seul serrage en sacrifiant la matière qui se trouve dans le serrage, en particulier lorsque les deux extrémités d'une pièce nécessitent d'être usinées. Ce mode permet d'assurer les concentricités entre les différents diamètres de la pièce. Toutefois, la coupe finale de la pièce requiert en principe l'utilisation d'une contre-broche qui soutiendra la pièce lors de cette opération. Ce mode d'usinage ne permet pas de diviser l'usinage de la pièce en broche et contre-broche, ce qui diminue la productivité de la machine d'un facteur pouvant aller jusqu'à 2.

La présente invention vise à remédier à ces inconvénients en proposant une machine d'usinage et un procédé d'usinage de pièces, notamment de pièces micromécaniques, telles que des axes de pivotement horloger, permettant d'obtenir des pièces usinées présentant des qualités extrêmes de concentricité, de coaxialité, de précision, de rugosité et de tolérance.

### Divulgation de l'invention

L'invention est définie par les revendications indépendantes.

A cet effet, l'invention concerne une machine d'usinage d'une pièce, notamment une pièce micromécanique, présentant au moins une surface de révolution d'axe de rotation A, ladite machine d'usinage comprenant des moyens d'usinage de précision sans force agencés pour usiner la pièce, un tour comprenant au moins une première broche présentant un axe de rotation B s'étendant selon l'axe Z dans un repère XYZ, ladite première broche étant mobile en translation selon l'axe Z et en rotation autour de son axe de rotation B, un premier dispositif de serrage agencé pour serrer la pièce à usiner et la monter sur la première broche, un premier système de mesure optique de la pièce intégré à la première broche et agencé pour au moins mesurer les dimensions réelles de la pièce lorsqu'elle est montée sur la première broche au moyen du premier dispositif de serrage, et un système de pilotage et un système de pilotage agencé pour gérer des paramètres d'usinage, ledit système de pilotage comprenant :
- des moyens d'enregistrement de dimensions finales prédéterminées de la pièce à atteindre après usinage avec une tolérance prédéfinie,
- des moyens de commande du premier système de mesure optique pour mesurer et enregistrer des dimensions réelles de la pièce montée sur la première broche,
- des moyens de comparaison des dimensions réelles mesurées de la pièce avec au moins les dimensions finales prédéterminées,
- des moyens de correction pour adapter les paramètres d'usinage en fonction de la comparaison des dimensions réelles mesurées de la pièce avec au moins les dimensions finales prédéterminées,
- des moyens de commande des moyens d'usinage de précision sans force pour usiner la pièce en fonction des paramètres d'usinage.

Selon l'invention, ledit système de pilotage est agencé pour piloter lesdits moyens de commande du premier système de mesure optique, lesdits moyens de comparaison, lesdits moyens de commande des moyens d'usinage, et éventuellement lesdits moyens de correction, pour commander une première phase d'usinage de la pièce montée sur la première broche programmée pour obtenir une ébauche montée sur la première broche dont les dimensions cibles sont supérieures de 0.5 à 20% aux dimensions finales prédéterminées de la pièce, puis pour réaliser au moins une mesure des dimensions réelles de l'ébauche montée sur la première broche puis pour modifier les paramètres d'usinage des moyens de commande des moyens d'usinage de précision sans force pour commander, à partir de l'ébauche montée sur la première broche, une deuxième phase d'usinage par enlèvement de quantité de matière suffisamment faible pour obtenir la pièce finie montée sur la première broche présentant une Ra inférieure à 40 nm, de préférence inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées, les paramètres d'usinage pour la deuxième phase étant éventuellement corrigés en fonction de la comparaison des dimensions réelles mesurées de l'ébauche montée sur la première broche avec les dimensions finales prédéterminées.

La présente invention concerne également un procédé d'usinage d'une pièce, notamment une pièce micromécanique, présentant au moins une surface de révolution d'axe de rotation A au moyen de la machine d'usinage telle que définie ci-dessus, ledit procédé comprenant les étapes suivantes :
a) enregistrer des dimensions finales prédéterminées de la pièce à atteindre après usinage avec une tolérance prédéfinie ;
b) se munir d'une pièce à usiner ;
c) monter la pièce à usiner dans l'une des broches de la machine d'usinage au moyen de son dispositif de serrage ;
d) usiner la pièce à usiner montée sur sa broche en rotation par les moyens d'usinage de précision sans force selon la première phase d'usinage pour obtenir une ébauche montée sur sa broche dont les dimensions cibles sont supérieures de 0.5 à 20% aux dimensions finales prédéterminées de la pièce ;
e) mesurer les dimensions de la pièce usinée selon la première phase d'usinage de l'étape précédente au moyen du système de mesure optique de la première broche pour obtenir des dimensions réelles mesurées de l'ébauche montée sur sa broche ;
f) comparer les dimensions réelles mesurées à l'étape e) aux dimensions finales prédéterminées enregistrés à l'étape a) ;
g) modifier les paramètres d'usinage des moyens de commande des moyens d'usinage de précision sans force pour commander, à partir de l'ébauche montée sur sa broche (12), la deuxième phase d'usinage ;
h) si les dimensions réelles mesurées à l'étape e) diffèrent des dimensions cibles de l'ébauche, corriger les paramètres d'usinage gérés par le système de pilotage (20) pour la deuxième phase d'usinage en fonction de la comparaison des mesures obtenues à l'étape f) ;
i) usiner l'ébauche montée sur sa broche en rotation par les moyens d'usinage de précision sans force en fonction des paramètres d'usinage modifiés à l'étape g), et éventuellement corrigés à l'étape h), selon la deuxième phase d'usinage par enlèvement de quantité de matière suffisamment faible pour obtenir la pièce finie montée sur la première broche présentant une Ra inférieure à 40 nm, de préférence inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées.

Le procédé selon l'invention s'applique à chaque pièce à usiner de sorte que toute pièce usinée est alors mesurée et contrôlée *in situ,* sur sa broche.

Une telle machine et un tel procédé d'usinage permettent d'obtenir des pièces usinées présentant des qualités extrêmes de concentricité, de coaxialité, de précision, de rugosité et de tolérance.

### Brève description des dessins

D'autres caractéristiques et avantages de la présente invention apparaîtront à la lecture de la description détaillée suivante d'un mode de réalisation de l'invention, donné à titre d'exemple non limitatif, et faite en référence aux dessins annexés dans lesquels :
- la figure 1 est une vue schématique d'une machine d'usinage selon l'invention;
- la figure 2 est une vue schématique d'une broche, du dispositif de serrage et d'un système de mesure optique ;
- la figure 3 est une vue schématique d'une broche et d'un dispositif de correction de la concentricité ;
- la figure 4 est une vue agrandie d'une pièce montée sur son dispositif de serrage ;
- la figure 5 est une vue de détail de la figure 3 montrant la broche, le dispositif de serrage et le dispositif de correction de la concentricité ;
- la figure 6 est une vue de détail du dispositif de serrage monté sur la broche et du dispositif de correction de la concentricité ;
- la figure 7 est une vue en coupe du dispositif de serrage monté sur la broche et du dispositif de correction de la concentricité ;
- la figure 8 est une représentation schématique des étapes du procédé selon l'invention ; et
- la figure 9 est une représentation schématique des étapes de correction de la concentricité.

### Modes de réalisation de l'invention

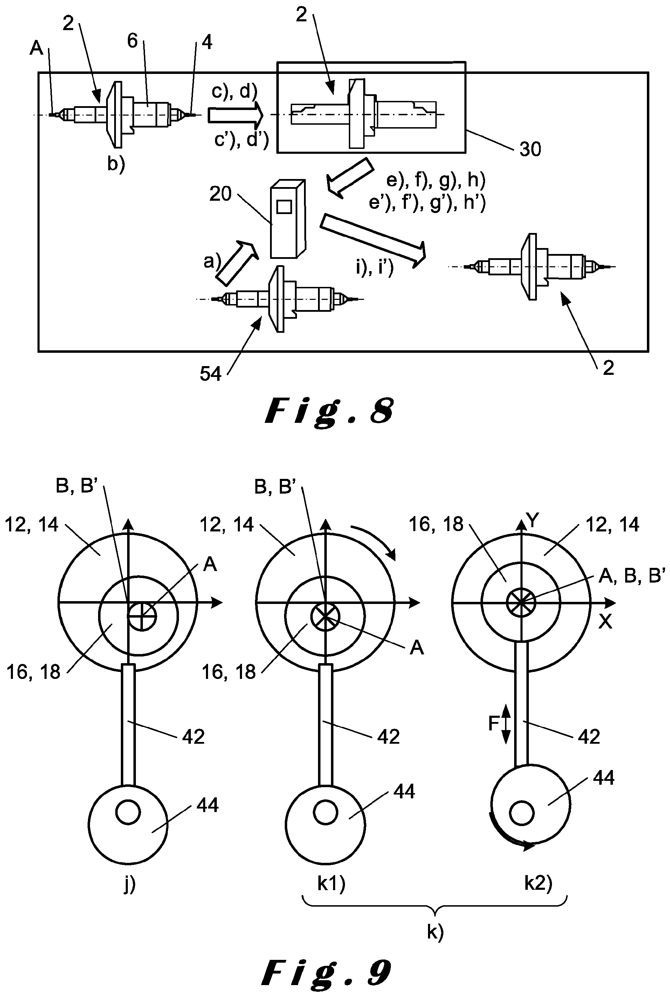

En référence à la figure 1, la présente invention concerne une machine d'usinage 1 d'une pièce 2, notamment une pièce micromécanique, présentant au moins une surface de révolution d'axe de rotation A. Une telle pièce est représentée par exemple sur la figure 9. Cette pièce 2 peut être par exemple un axe de pivotement de précision pouvant être de très petites dimensions comme un axe de pivotement d'horlogerie. Une telle pièce met en jeu de très petits diamètres, compris entre 40 µm et 400 µm.

De tels axes de précision peuvent être en matériaux durs, tels que des matériaux métalliques du type aciers trempés, aciers inoxydables, Inconel, ou des verres métalliques, des céramiques ou des matériaux à base de carbure de silicium.

L'axe de pivotement horloger comprend à chacune de ses extrémités un pivot 4, dans le prolongement d'un tigeron 6. Classiquement, au moins lesdits pivots présentent une surface de révolution, et sont destinés à venir chacun pivoter dans un palier, typiquement dans un orifice d'une pierre ou rubis.

L'axe de pivotement horloger présente traditionnellement un diamètre inférieur ou égal à 2 mm et le pivot 4 présente un diamètre extérieur inférieur ou égal à 200 µm, de préférence inférieur ou égal à 100 µm, préférentiellement inférieur ou égal à 90 µm, et plus préférentiellement inférieur ou égal à 60 µm, quand l'axe de pivotement 2 est à l'état fini, prêt à être utilisé. Le pivot 4 est de type conique par exemple.

L'axe de pivotement horloger peut présenter une pluralité de sections de diamètres différents, définissant classiquement des portées et des épaulements, réalisés par usinage.

L'axe de pivotement peut être un axe de balancier par exemple. Bien évidemment, d'autres types d'axes de pivotement horlogers sont envisageables comme par exemple des axes de mobiles horlogers, typiquement des pignons d'échappement, des arbres de barillet ou encore des tiges d'ancre. Dans ce cas, l'axe de pivotement peut comporter des éléments fonctionnels liés à son utilisation. Par exemple, l'axe peut comporter une denture, un taraudage ou un crochet pour la fixation du ressort dans le cas d'un arbre de barillet. Les pièces de ce type présentent au niveau du corps des diamètres inférieurs de préférence à 2 mm, et des pivots de diamètre inférieur de préférence à 0.2 mm comme décrit ci-dessus, avec une précision de quelques microns. La pièce décrite ici est un axe de pivotement configuré pour convenir de préférence aux applications horlogères, mais il est bien évident qu'elle peut être utilisée dans toute autre application requérant la même configuration d'axe de pivotement.

La pièce 2 à usiner montée sur la machine d'usinage 1 peut être un morceau de matériau usinable sans effort, un brut ou un lopin qui sera entièrement usiné et fini dans la machine d'usinage 1 pour obtenir la pièce présentant ses dimensions et sa rugosité finales au moyen de la seule et même machine d'usinage 1.

La pièce 2 à usiner montée sur la machine d'usinage 1 peut être aussi une ébauche, c'est-à-dire une pièce déjà partiellement usinée au moyen d'un autre procédé et d'une autre machine, par exemple par enlèvement de copeaux via un procédé de décolletage traditionnel ou d'usinage conventionnel ou toute autre méthode d'enlèvement de matière, et qui sera reprise et finie sur la machine d'usinage 1 pour obtenir la pièce présentant ses dimensions et sa rugosité finales.

La machine d'usinage 1 comprend des moyens d'usinage de précision sans force 8 agencés pour usiner la pièce 2. Dans la présente description, on appelle usinage sans force ou sans effort un usinage non conventionnel selon lequel il n'y a pas d'action mécanique transmise par contact direct et effort entre un outil et la pièce, contrairement à un usinage conventionnel où il existe un contact direct entre l'outil et la pièce et dans lequel d'importantes forces de coupe sont impliquées. Un usinage sans force est donc un usinage sans contact direct entre la pièce à usiner et un outil d'usinage qui serait susceptible d'exercer un effort ou une contrainte sur ladite pièce.

D'une manière avantageuse, les moyens d'usinage de précision sans force 8 sont agencés pour attaquer la matière radialement et/ou tangentiellement et/ou axialement à la pièce 2 à usiner, et de préférence radialement, alors que cette dernière est en rotation.

D'une manière avantageuse, les moyens d'usinage de précision sans force comprennent des moyens d'usinage par tournage par femto laser, par tournage électrochimique (electrochemical machining (ECM)), ou par tournage par électroérosion (par exemple EDM (electrical discharge machining) par fil).

De préférence, les moyens d'usinage de précision sans force sont un femto laser qui délivre des pulses de haute énergie sur des durées extrêmement faibles (de l'ordre de 10-15 seconde). Cela permet des processus d'ablation de matière sans dégât à l'interface d'usinage. Quasiment toutes les matières peuvent être usinées par ce processus.

Avantageusement le laser pulsé femto seconde est un laser de longueurs d'onde comprises par exemple entre 200 nm et 2000 nm, de préférence entre 400 nm et 1 000 nm, bornes incluses. Les caractéristiques du laser peuvent être par exemple : puissance moyenne entre 1 W et 100 W, énergie par pulse entre 20 µJ et 4000 µJ, fréquence entre 100 kHz et 1000 kHz, durée d'impulsion entre 100 fs et 2 ps.

Le laser peut être piloté au moyen d'une tête de scan 2D (2 axes) ou d'une tête de précession d'au moins 3 axes, et de préférence 5 axes. De tels dispositifs sont disponibles sur le marché.

Le laser est piloté et programmé pour créer une zone d'action 9, dans la course de la pièce 2 à usiner montée sur la machine 1. Comme cela sera décrit plus en détails ci-dessous, ladite zone d'action 9 est modifiée entre une première phase d'usinage et une deuxième phase d'usinage et évolue au cours de la deuxième phase d'usinage pour réduire au fur et à mesure l'interaction avec la matière, afin d'obtenir des pièces avec une extrême précision et d'une rugosité extrêmement faible.

La machine d'usinage comprend également un tour numérique 10 comprenant au moins une première broche 12 et une deuxième broche 14 faisant office de contre-broche.

La première broche 12 présente un axe de rotation B s'étendant selon l'axe Z dans un repère XYZ, ladite première broche étant mobile en translation selon l'axe Z et en rotation autour de son axe de rotation B.

De même, la deuxième broche 14 présente un axe de rotation B' s'étendant selon l'axe Z dans le repère XYZ, en regard de la première broche 12, ladite deuxième broche 14 étant mobile en translation selon l'axe Z et en rotation autour de son axe de rotation B'.

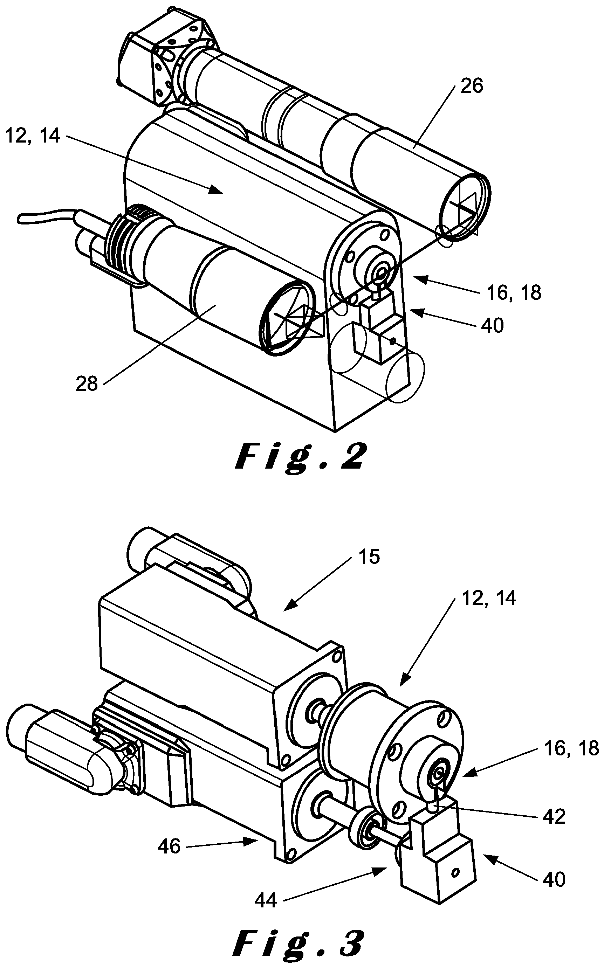

Chaque broche 12, 14 est entrainée en rotation, alimentée par un moteur 15 (cf. figure 3).

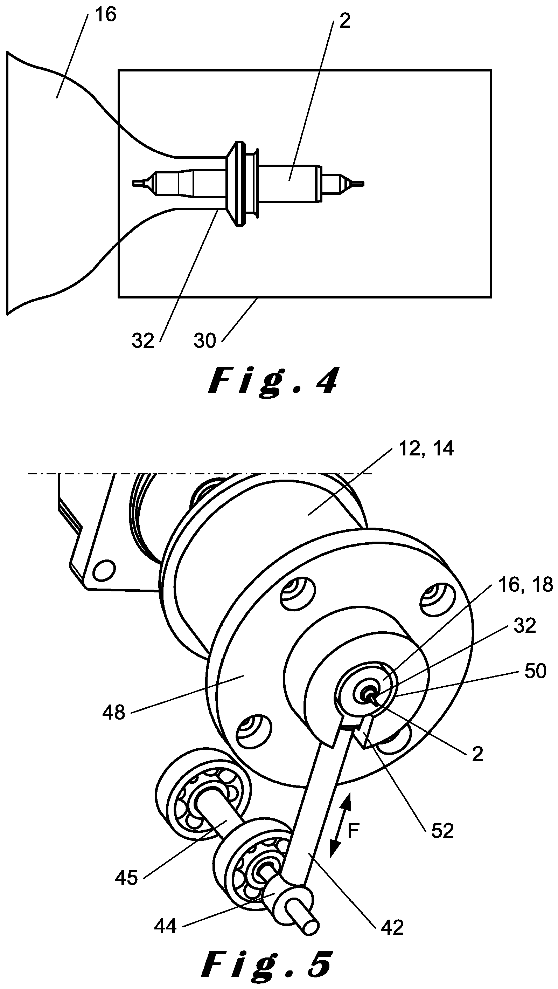

Comme le montrent par exemple les figures 2 et 4, la première broche 12 est associée à un premier dispositif de serrage 16 agencé pour serrer une première extrémité de la pièce 2 à usiner, et laisser libre la seconde extrémité en exposant la partie à usiner de la pièce 2, et pour monter ladite pièce 2 sur ladite première broche 12.

De même, la deuxième broche 14 est associée à un deuxième dispositif de serrage 18 agencé pour serrer la deuxième extrémité de la pièce à usiner, et laisser libre la première extrémité en exposant l'autre partie à usiner de la pièce 2, et pour monter ladite pièce 2 sur ladite deuxième broche 14.

Les dispositifs de serrage 16, 18 seront décrits en détails ultérieurement.

La machine comprend également un système de pilotage 20 agencé pour gérer des paramètres d'usinage qui comprennent notamment les caractéristiques de fonctionnement des moyens d'usinage de précision sans force 8, telles que, par exemple, dans le cas d'un femto laser, la puissance, l'énergie par pulse, la fréquence, la durée d'impulsion, les différentes profondeurs de passe, le mouvement (circulaire, oscillatoire, ...) du laser ajouté à son mouvement primaire par rapport à la pièce 2 afin de positionner le faisceau du laser selon les phases d'usinage, comme cela sera décrit ci-après, éventuellement les angles d'attaque (p. ex. : mouvements de précession, mouvements d'inclinaison de la pièce), etc...

Pour le tournage électrochimique (ECM), les paramètres d'usinage sont par exemple la tension, le courant et la concentration en électrolyte. Pour le tournage par électroérosion, les paramètres d'usinage sont par exemple la tension et le courant.

Les paramètres d'usinage comprennent également la vitesse de rotation des broches 12, 14 (qui peut être constante ou réglée dynamiquement, par exemple **synchronisée** avec la vitesse du faisceau laser), et l'angle d'inclinaison des broches par rapport au « plan » d'usinage ou par rapport aux deux autres plans de l'espace cartésien.

Le système de pilotage 20 est également agencé pour gérer le positionnement des moyens d'usinage de précision sans force 8 par rapport à la pièce 2 à usiner et le positionnement du dispositif de serrage 16, 18 par rapport à sa broche 12, 14 respectivement, comme cela sera décrit plus en détails ci-après.

La machine 1 peut comprendre également un dispositif d'alimentation des pièces, un robot de chargement et de déchargement agencé pour prendre une pièce dans le dispositif d'amenée, positionner la pièce dans l'un des dispositifs de serrages sur une broche, puis la retirer après usinage de la partie exposée, positionner la pièce dans l'autre dispositif de serrage sur l'autre broche, puis retirer la pièce usinée et la décharger.

La machine peut comprendre également un système de climatisation de sorte que tout l'environnement de la machine est sous contrôle thermique, un dispositif de refroidissement à eau pour le laser, ainsi que toutes les connectiques et alimentations nécessaires à son fonctionnement.

La machine d'usinage 1 comprend un premier système de mesure optique 22 de la pièce 2 agencé pour au moins mesurer les dimensions réelles de la pièce 2 lorsqu'elle est montée sur la première broche 12 au moyen du premier dispositif de serrage 16. D'une manière particulièrement avantageuse, le premier système de mesure optique 22 est intégré à la première broche 12, c'est-à-dire porté par cette dernière.

De même, notamment lorsque la deuxième broche 14 est utilisée pour procéder à un usinage, la machine peut avantageusement comprendre un deuxième système de mesure optique 24 de la pièce 2 agencé pour au moins mesurer les dimensions réelles de la pièce 2 lorsqu'elle est montée sur la deuxième broche 14 au moyen du deuxième dispositif de serrage 18. D'une manière particulièrement avantageuse, le deuxième système de mesure optique 24 est intégré à la deuxième broche 14, c'est-à-dire porté par cette dernière.

Ainsi, chaque système 22, 24 de mesure par voie optique des dimensions réelles de la pièce montée sur sa broche est intégré à sa broche respective permettant des mesures *in situ,* sans avoir à retirer la pièce de sa broche et de son dispositif de serrage.

Avantageusement, chaque système de mesure optique 22, 24 comprend une optique télécentrique 26 associée à un éclairage télécentrique 28 permettant une illumination collimatée, comme représenté sur la figure 2. Chaque système de mesure optique 22, 24 est agencé pour créer un champ de mesure 30 autour de la pièce 2 montée sur son dispositif de serrage 16, 18, comme le montrent les figures 1 et 4.

De plus, le système de pilotage 20 comprend :
- des moyens d'enregistrement 20a de dimensions finales prédéterminées de la pièce à atteindre après usinage avec une tolérance prédéfinie, les dimensions finales prédéterminées à atteindre après usinage étant les dimensions finales de la pièce lorsque la pièce à usiner est un lopin entièrement usiné et fini ou une ébauche finie dans la machine 1 pour obtenir ladite pièce ;
- des moyens de commande 20b du premier système de mesure optique 22 pour mesurer et enregistrer des dimensions réelles de la pièce montée sur la première broche 12 ;
- des moyens de commande 20'b du deuxième système de mesure optique 24, lorsqu'il est présent, pour mesurer et enregistrer les dimensions réelles de la pièce montée sur la deuxième broche 14 ;
- des moyens de comparaison 20c des dimensions réelles mesurées de la pièce avec au moins les dimensions finales prédéterminées ;
- des moyens de correction 20d pour adapter les paramètres d'usinage, tels que les caractéristiques du laser ou la vitesse de rotation des broches 12, 14, en fonction de la comparaison des dimensions réelles mesurées de la pièce avec au moins les dimensions finales prédéterminées ;
- des moyens de commande 20e des moyens d'usinage de précision sans force 8 pour usiner la pièce en fonction des paramètres d'usinage.

Conformément à la présente invention, le système de pilotage 20 est agencé pour piloter lesdits moyens de commande 20b du premier système de mesure optique 22, lesdits moyens de comparaison 20c, lesdits moyens de commande 20e des moyens d'usinage 8, et éventuellement lesdits moyens de correction 20d, pour commander une première phase d'usinage de la partie exposée de la pièce 2 montée sur la première broche 12 dans son dispositif de serrage 16, ladite première phase étant programmée pour obtenir une ébauche montée sur la première broche 12 dans son dispositif de serrage 16 et dont les dimensions cibles, notamment le diamètre cible, ont été choisies pour être supérieures de 0.5% à 20% aux dimensions finales prédéterminées de la pièce 2, notamment le diamètre final prédéterminé de la pièce 2, puis pour réaliser au moins une mesure des dimensions réelles de l'ébauche montée sur la première broche 12 dans son dispositif de serrage 16 puis pour modifier les paramètres d'usinage des moyens de commande des moyens d'usinage de précision sans force pour commander, à partir de l'ébauche montée sur la première broche 12 dans son dispositif de serrage 16, une deuxième phase d'usinage par enlèvement de quantité de matière suffisamment faible pour obtenir la pièce 2 finie montée sur la première broche 12 dans son dispositif de serrage 16, ladite pièce 2 présentant une Ra, uniforme à ± 20%, inférieure à 40 nm, de préférence inférieure ou égale à 25 nm, de préférence inférieure ou égale à 20 nm, de préférence inférieure ou égale à 15 nm, et préférentiellement inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées, les paramètres d'usinage pour la deuxième phase étant éventuellement corrigés par rapport aux paramètres d'usinage correspondant à une ébauche ayant les dimensions cibles, en fonction de la comparaison des dimensions réelles mesurées de l'ébauche montée sur la première broche 12 dans son dispositif de serrage 16 avec les dimensions cibles de l'ébauche qui sont définies par rapport auxdites dimensions finales prédéterminées. L'éventuelle correction des paramètres d'usinage est donc réalisée en fonction de la comparaison des dimensions réelles mesurées de l'ébauche avec les dimensions finales prédéterminées.

La rugosité Ra est définie selon la norme ISO 4287.

De même, le système de pilotage 20 est agencé pour piloter lesdits moyens de commande 20'b du deuxième système de mesure optique 24, lorsqu'il est présent, lesdits moyens de comparaison 20c, lesdits moyens de commande 20e des moyens d'usinage 8, et éventuellement lesdits moyens de correction 20d, pour commander une troisième phase d'usinage de l'autre partie exposée de la pièce 2 montée sur la deuxième broche 14 dans son dispositif de serrage 18 programmée pour obtenir une ébauche montée sur la deuxième broche 14 dans son dispositif de serrage 18, et dont les dimensions cibles ont été choisies pour être supérieures de 0.5 à 20% aux dimensions finales prédéterminées de la pièce 2, puis pour réaliser au moins une mesure des dimensions réelles de l'ébauche montée sur la deuxième broche 14 dans son dispositif de serrage 18 puis pour modifier les paramètres d'usinage des moyens de commande des moyens d'usinage de précision sans force pour commander, à partir de l'ébauche montée sur la deuxième broche 14 dans son dispositif de serrage 18, une quatrième phase d'usinage par enlèvement de quantité de matière suffisamment faible pour obtenir la pièce 2 finie montée sur la deuxième broche 14 sur son dispositif de serrage 18, ladite pièce présentant une Ra, uniforme à ± 20%, inférieure à 40 nm, de préférence inférieure ou égale à 25 nm, de préférence inférieure ou égale à 20 nm, de préférence inférieure ou égale à 15 nm, et préférentiellement inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées, les paramètres d'usinage pour la quatrième phase étant éventuellement corrigés en fonction de la comparaison des dimensions réelles mesurées de l'ébauche montée sur la deuxième broche 14 dans son dispositif de serrage 18 avec les dimensions cibles de l'ébauche qui sont définies par rapport auxdites dimensions finales prédéterminées, et donc avec les dimensions finales prédéterminées.

Selon l'invention, le système de pilotage est agencé pour piloter lesdits moyens de commande 20e des moyens d'usinage de précision sans force 8 et leurs paramètres d'usinage de sorte que l'énergie appliquée à la pièce 2 lors de la deuxième phase d'usinage est inférieure d'au moins 40% à l'énergie appliquée à la pièce 2 lors de la première phase d'usinage, l'énergie appliquée à la pièce 2 lors de la deuxième phase d'usinage pouvant de préférence diminuer au fur et à mesure des interactions avec la matière afin d'avoir un enlèvement de matière très fin à chaque interaction avec la matière de la pièce et d'avoir une meilleure résolution d'usinage au cours de la deuxième phase.

Par exemple, pour le tournage électrochimique (ECM), les paramètres d'usinage modulables sont notamment la tension, le courant et la concentration en électrolyte. Pour le tournage par électroérosion, les paramètres d'usinage modulables sont notamment la tension et le courant.

D'une manière avantageuse, les moyens d'usinage de précision sans force 8 sont des moyens d'usinage par tournage par femto laser. De préférence, les moyens d'usinage de précision sans force sont agencés pour émettre un faisceau dont le diamètre est inférieur à 20 µm, de préférence inférieur à 8 µm. Le diamètre d'un faisceau laser définit son extension transversale, c'est-à-dire sa taille physique perpendiculairement à la direction de propagation. Il est défini à la largeur 1/e², qui est délimitée par les points où l'intensité du faisceau atteint 1/e² (≈ 13.5%) de sa valeur maximale.

Le système de pilotage est agencé pour piloter lesdits moyens de commande 20e des moyens d'usinage de précision sans force 8 pour commander le positionnement du faisceau pour interagir avec la matière de la pièce 2 de sorte que plus de 50% du diamètre du faisceau est utilisé lors de la première phase d'usinage et de sorte que moins de 50% du diamètre du faisceau est utilisé lors de la deuxième phase d'usinage.

Par exemple, pour un usinage de précision sans force par femto laser, on utilise de préférence un spot de diamètre inférieur ou égal à 8 µm, de préférence inférieur ou égal à 6 µm, voire 4 µm, le faisceau laser attaquant l'axe de pivotement en rotation radialement.

Ainsi le système de pilotage 20 de l'invention est agencé pour usiner une pièce qui reste sur sa broche, dans son dispositif de serrage au cours des deux phases d'usinage, tout en pouvant être mesurée. La pièce obtenue est usinée avec une précision extrême de l'ordre inférieur ou égal à ± 1 µm, de préférence inférieur ou égal à ± 0.5 µm, et une rugosité extrême telle que définie ci-dessus.

Les dispositifs de serrage 16, 18 et leur montage sur leur broche respective 12, 14, sont maintenant décrits en détail en référence aux figures 3 à 7.

D'une manière particulièrement avantageuse, chaque dispositif de serrage 16, 18 comprend un système de serrage ou de maintien par le vide de la pièce à usiner 2, tel qu'un système Venturi intégré, agencé pour créer une dépression et maintenir la pièce 2 plaquée dans son dispositif de serrage 16, 18.

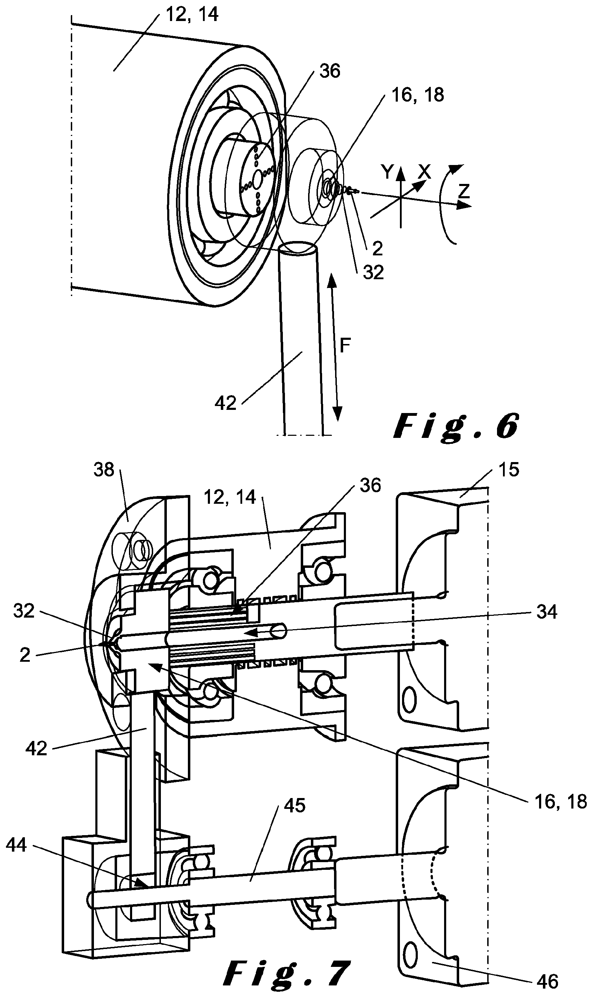

Plus particulièrement, et en référence à la figure 7, chaque dispositif de serrage 16, 18 comprend une tête de serrage 32 présentant un orifice dans lequel est introduite une extrémité de la pièce 2 à usiner, ledit orifice communiquant avec le système Venturi via un canal 34.

De plus, il est également prévu un système de maintien par le vide 36 du dispositif de serrage 16, 18 sur sa broche respective 12, 14, relié au système Venturi intégré, la dépression créée permettant également de maintenir chaque dispositif de serrage 16, 18 plaqué sur sa broche respective 12, 14, dans une position fixe au moins pendant les usinages.

D'une manière particulièrement avantageuse, comme l'usinage de précision sans force mis en œuvre selon l'invention, notamment par femto laser, se fait sans effort mécanique, il est alors possible d'utiliser un système de serrage par le vide pour maintenir la pièce dans son dispositif de serrage et un système de maintien par le vide pour maintenir le dispositif de serrage sur sa broche.

D'une manière avantageuse, le système de pilotage 20 est agencé pour contrôler le vide afin de pouvoir déplacer le dispositif de serrage dans le plan X-Y au moins selon l'axe Y quand cela sera nécessaire pour corriger la concentricité, comme cela sera décrit ci-dessous. Ainsi, chaque dispositif de serrage 16, 18 est agencé pour être maintenu sur sa broche respective 12, 14 selon l'axe Z et pour pouvoir être déplacé dans le plan X-Y au moins selon l'axe Y par une commande du système de pilotage 20 pour corriger la concentricité.

A cet effet, chaque système de mesure optique 22, 24 de la pièce 2 est agencé pour également mesurer la concentricité de ladite pièce à usiner 2 montée sur sa broche 12, 14, entre l'axe de rotation A de la pièce 2 et l'axe de rotation B, B' de la broche 12, 14 respectivement.

De plus, la machine d'usinage 1 comprend un dispositif de correction de la concentricité 40 associé à chaque dispositif de serrage 16, 18, ledit dispositif de correction 40 étant agencé pour pouvoir déplacer en translation le dispositif de serrage 16, 18 dans le plan X-Y selon l'axe Y.

Plus particulièrement, et en référence aux figures 5 à 7, le dispositif de correction de la concentricité 40 comprend une tringle 42 agencée pour pouvoir coopérer radialement selon l'axe Y avec le pourtour extérieur du dispositif de serrage 16, 18, par appui sur ledit pourtour, et une came de correction 44 comprenant un excentrique, coopérant avec ladite tringle 42 par appui sur ladite tringle 42, et agencée pour être entrainée en rotation en étant solidaire d'un arbre 45 entrainé par un moteur 46.

Le flasque 48 de la broche 12, 14 présente un logement 50 dans lequel le dispositif de serrage 16, 18 est positionné avec un certain jeu au moins en Y pour pouvoir positionner et recentrer si nécessaire ledit dispositif de serrage 16, 18 par rapport à l'axe de sa broche 12, 14. En outre le logement 50 présente une ouverture radiale 52 permettant le passage de la tringle 42 pour pouvoir venir radialement au contact avec ledit dispositif de serrage 16, 18 lorsqu'il est actionné par la came de correction 44.

La came de correction 44 est agencée pour être commandée par le système de pilotage 20 pour déplacer la tringle 42 en translation selon l'axe Y, comme représenté par la flèche F, afin de déplacer le dispositif de serrage 16, 18 en translation selon l'axe Y en fonction de la concentricité à corriger.

De plus, le système de pilotage 20 est agencé pour commander un déplacement angulaire de la broche 12, 14 dans le plan X-Y en fonction de la concentricité à corriger.

Plus particulièrement, le système de pilotage 20 est agencé pour commander un déplacement angulaire de la broche 12, 14 dans le plan X-Y et/ou pour commander un déplacement du dispositif de serrage 16, 18 en translation dans le plan X-Y selon l'axe Y via le dispositif de correction 40 de sorte que les axes de rotation A, B, respectivement B' de la pièce à usiner 2 et de sa broche 12, 14 respectivement soient confondus avant usinage.

Ainsi, la position radiale de chaque dispositif de serrage 16, 18 serrant la pièce 2 est corrigée par rapport à l'axe de rotation B, B' de la broche 12, 14 associée avant usinage, permettant d'obtenir une pièce usinée présentant des qualités extrêmes de concentricité et de coaxialité.

Avantageusement, chaque système de mesure optique 22, 24 de la pièce 2 est agencé pour mesurer la rugosité réelle de la pièce à usiner, le système de pilotage 20 étant agencé pour comparer ladite rugosité réelle avec une rugosité finale prédéterminée à atteindre.

L'invention se rapporte également au procédé d'usinage d'une pièce 2, notamment une pièce micromécanique, présentant au moins une surface de révolution d'axe de rotation A au moyen d'une machine d'usinage 1 telle que décrite ci-dessus.

Le procédé selon l'invention comporte avantageusement les étapes suivantes, en référence à la figure 8 :
a) enregistrer avec les moyens d'enregistrement 20a du système de pilotage 20 des dimensions finales prédéterminées de la pièce 2 à atteindre après usinage avec une tolérance prédéfinie, correspondant à une pièce modèle 54, lesdites dimensions finales prédéterminées à atteindre après usinage étant les dimensions finales de la pièce lorsque la pièce à usiner est un lopin entièrement usiné et fini ou une ébauche finie dans la machine 1 pour obtenir ladite pièce;
b) se munir d'une pièce 2 à usiner;
c) monter la pièce 2 à usiner dans l'une des broches 12, 14 de la machine d'usinage 1 au moyen de son dispositif de serrage 16 associé, maintenu par le vide, ledit dispositif de serrage 16 ayant été au préalable positionné de manière centrée sur sa broche 12 et le positionnement de la broche 12 et le positionnement initial des moyens d'usinage de précision sans force 8, notamment un laser femto-seconde pour positionner correctement sa zone d'action 9, ayant été réglés au préalable au moyen d'une pièce de test;
d) usiner par les moyens d'usinage de précision sans force 8, notamment un laser femto-seconde, la partie exposée de la pièce 2 à usiner en attaquant la matière radialement et/ou tangentiellement et/ou axialement, de préférence radialement, à la pièce 2 montée sur sa broche 12 en rotation via son dispositif de serrage 16, selon la première phase d'usinage programmée pour obtenir une ébauche montée sur sa broche 12 dont les dimensions cibles sont supérieures de 0.5 à 20% aux dimensions finales prédéterminées de la pièce modèle 54;
e) mesurer et enregistrer les dimensions de la pièce 2 usinée selon la première phase d'usinage de l'étape précédente dans le champ de mesure 30 au moyen du système de mesure optique associé 22 prévu sur la première broche 12 de la machine d'usinage 1 et des moyens de commande 20b du système de pilotage 20 pour obtenir des dimensions réelles mesurées de l'ébauche de la pièce 2 montée sur sa broche associée 12;
f) comparer les dimensions réelles mesurées à l'étape e) aux dimensions finales prédéterminées de la pièce modèle 54 enregistrées à l'étape a), et donc comparées par rapport aux dimensions cibles de l'ébauche qui sont définies par rapport auxdites dimensions finales, au moyen des moyens de comparaison 20c du système de pilotage 20;
g) modifier les paramètres d'usinage des moyens de commande des moyens d'usinage de précision sans force pour commander, à partir de l'ébauche montée sur sa broche 12, la deuxième phase d'usinage, les paramètres d'usinage modifiés pour la deuxième phase d'usinage étant plus particulièrement, dans le cas d'un femto laser, les caractéristiques du laser à savoir la puissance, sa distance par rapport à la pièce, l'énergie par pulse, la fréquence, la durée d'impulsion, et/ou la vitesse de rotation de la broche associée 12; pour le tournage électrochimique (ECM), les paramètres d'usinage sont par exemple la tension, le courant et la concentration en électrolyte ; pour le tournage par électroérosion, les paramètres d'usinage sont par exemple la tension et le courant ;
h) si les dimensions réelles mesurées à l'étape e) diffèrent des dimensions cibles de l'ébauche, corriger les paramètres d'usinage gérés par le système de pilotage 20 pour la deuxième phase d'usinage en fonction de la comparaison des mesures obtenues à l'étape f) au moyen des moyens de correction 20d; les paramètres d'usinage corrigés sont plus particulièrement, dans le cas d'un femto laser, les caractéristiques du laser à savoir la puissance, sa distance par rapport à la pièce, l'énergie par pulse, la fréquence, la durée d'impulsion, et/ou la vitesse de rotation de la broche associée 12; pour le tournage électrochimique (ECM), les paramètres d'usinage sont par exemple la tension, le courant et la concentration en électrolyte ; pour le tournage par électroérosion, les paramètres d'usinage sont par exemple la tension et le courant ;
i) usiner la partie exposée de l'ébauche de la pièce 2 en attaquant la matière radialement et/ou tangentiellement et/ou axialement, de préférence radialement, à la pièce 2 montée sur sa broche en rotation 12 par les moyens d'usinage de précision sans force 8, commandés par les moyens de commande 20e du système de pilotage 20, en fonction des paramètres d'usinage modifiés à l'étape g), et éventuellement corrigés à l'étape h), selon la deuxième phase d'usinage par enlèvement de quantité de matière suffisamment faible pour obtenir la pièce 2 finie montée sur la première broche 12 présentant une Ra, uniforme à ± 20%, inférieure à 40 nm, de préférence inférieure ou égale à 25 nm, de préférence inférieure ou égale à 20 nm, de préférence inférieure ou égale à 15 nm, et préférentiellement inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées.

Ensuite, dans le cas où il est prévu d'usiner l'autre partie de la pièce 2 après usinage de la partie exposée de la pièce 2 montée sur la broche 12, le procédé d'usinage selon l'invention comprend avantageusement les étapes suivantes :
c') retirer, par le robot, la pièce 2 usinée de son dispositif de serrage 16 maintenu sur la broche 12 et la monter dans l'autre broche 14 de la machine d'usinage 1 au moyen de son dispositif de serrage 18 associé, maintenu par le vide, ledit dispositif de serrage 18 ayant été au préalable positionné de manière centrée sur sa broche 14 et le positionnement de la broche 14 et le positionnement initial des moyens d'usinage de précision sans force 8, notamment un laser femto-seconde pour positionner correctement sa zone d'action 9, ayant été réglés au préalable au moyen d'une pièce de test ;
d') usiner par les moyens d'usinage de précision sans force 8, notamment un laser femto-seconde, la partie exposée de la pièce 2 à usiner en attaquant la matière radialement et/ou tangentiellement et/ou axialement, de préférence radialement, à la pièce 2 montée sur sa broche 14 en rotation via son dispositif de serrage 18, selon la troisième phase d'usinage programmée pour obtenir une ébauche montée sur sa broche 14 dont les dimensions cibles sont supérieures de 0.5 à 20% aux dimensions finales prédéterminées de la pièce modèle 54;
e') mesurer et enregistrer les dimensions de la pièce 2 usinée selon la troisième phase d'usinage de l'étape précédente dans le champ de mesure associé 30 au moyen du système de mesure optique associé 24 prévu sur la deuxième broche 14 de la machine d'usinage 1 et des moyens de commande 20'b du système de pilotage 20 pour obtenir des dimensions réelles mesurées de l'ébauche de la pièce 2 montée sur sa broche associée 14;
f) comparer les dimensions réelles mesurées à l'étape e') aux dimensions finales prédéterminées de la pièce modèle 54 enregistrées à l'étape a), et donc comparées par rapport aux dimensions cibles de l'ébauche qui sont définies par rapport auxdites dimensions finales, au moyen des moyens de comparaison 20c du système de pilotage 20;
g') modifier les paramètres d'usinage des moyens de commande des moyens d'usinage de précision sans force pour commander, à partir de l'ébauche montée sur sa broche 14, la quatrième phase d'usinage ; les paramètres d'usinage modifiés pour la quatrième phase d'usinage étant plus particulièrement, dans le cas d'un femto laser, les caractéristiques du laser à savoir la puissance, sa distance par rapport à la pièce, l'énergie par pulse, la fréquence, la durée d'impulsion, et/ou la vitesse de rotation de la broche associée 12; pour le tournage électrochimique (ECM), les paramètres d'usinage sont par exemple la tension, le courant et la concentration en électrolyte ; pour le tournage par électroérosion, les paramètres d'usinage sont par exemple la tension et le courant
h') si les dimensions réelles mesurées à l'étape e') diffèrent des dimensions cibles de l'ébauche, corriger les paramètres d'usinage gérés par le système de pilotage 20 pour la quatrième phase d'usinage en fonction de la comparaison des mesures obtenues à l'étape f') au moyen des moyens de correction 20d; les paramètres d'usinage corrigés sont plus particulièrement, dans le cas d'un femto laser, les caractéristiques du laser à savoir la puissance, sa distance par rapport à la pièce, l'énergie par pulse, la fréquence, la durée d'impulsion, et/ou la vitesse de rotation de la broche associée 14; pour le tournage électrochimique (ECM), les paramètres d'usinage sont par exemple la tension, le courant et la concentration en électrolyte ; pour le tournage par électroérosion, les paramètres d'usinage sont par exemple la tension et le courant ;
i') usiner la partie exposée de l'ébauche de la pièce 2, en attaquant la matière radialement et/ou tangentiellement et/ou axialement, de préférence radialement, à la pièce 2 montée sur sa broche en rotation 14 par les moyens d'usinage de précision sans force 8, commandés par les moyens de commande 20e du système de pilotage 20, en fonction des paramètres d'usinage modifiés à l'étape g'), et éventuellement corrigés à l'étape h'), selon la quatrième phase d'usinage par enlèvement de quantité de matière suffisamment faible pour obtenir la pièce (2) finie montée sur la deuxième broche (14) présentant une Ra, uniforme à ± 20%, inférieure à 40 nm, de préférence inférieure ou égale à 25 nm, de préférence inférieure ou égale à 20 nm, de préférence inférieure ou égale à 15 nm, et préférentiellement inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées.

Ces étapes du procédé d'usinage de la pièce 2 sur la deuxième broche 14 sont optionnelles et peuvent être mises en œuvre ou pas selon les configurations de la pièce 2.

D'une manière avantageuse, le procédé d'usinage selon l'invention comprend, avant usinage selon l'étape d) et/ou d'), les étapes intermédiaires suivantes, en référence à la figure 9:
j) mesurer la concentricité de la pièce 2 à usiner montée sur sa broche 12, 14 entre l'axe de rotation A et l'axe de rotation de la broche B, B' respectivement par le système de mesure optique associé 22, 24 respectivement, à sa broche 12, 14;
k) corriger la concentricité de la pièce 2 à usiner par rapport à l'axe de rotation B, respectivement B' de sa broche associée 12, respectivement 14, par déplacement de son dispositif de serrage 16, respectivement 18, au moyen du dispositif de correction de la concentricité 40 associé, de sorte que les axes de rotation A, B, respectivement B', de la pièce 2 à usiner et de sa broche associée 12, respectivement 14, soient confondus.

Plus particulièrement, l'étape k) comprend une première sous-étape k1) de correction angulaire de la broche 12, 14 dans le plan XY par déplacement angulaire la broche 12, 14 et donc du dispositif de serrage associé 16, 18, la rotation de la broche 12, 14 étant commandée par le système de pilotage 20 en fonction de la concentricité à corriger.

L'étape k) comprend une deuxième sous-étape k2) de correction radiale du dispositif de serrage 16, 18 par son déplacement en translation dans le plan XY selon l'axe Y, comme montré par la flèche F, au moyen de la tringle 42 venue en appui radial, poussée par la came de correction 44 entrainée en rotation et commandée par le système de pilotage 20 en fonction de la concentricité à corriger. Lors de cette sous-étape k2, le système de pilotage 20 est agencé pour contrôler le vide afin de pouvoir déplacer le dispositif de serrage 16, 18 dans le plan X-Y au moins selon l'axe Y pour le recentrer par rapport à l'axe de sa broche associée 12, 14.

La correction de la concentricité est par exemple nécessaire lorsque le dispositif de serrage est décentré par rapport à sa broche lorsque la pièce à usiner est mise en place dans son dispositif de serrage. Selon la position du dispositif de serrage, seule l'étape k2) peut être nécessaire. Si les axes de la broche et de la pièce à usiner sont coaxiaux dès le départ, seule l'étape j) de mesure de la concentricité est mise en œuvre, l'étape k) n'étant pas nécessaire.

Les différentes étapes b) à i), c') à i'), j) et k) décrites ci-dessus s'appliquent à chaque pièce 2 à usiner. Toutes les pièces 2 sont alors mesurées et contrôlées.

Selon l'invention, les moyens de commande 20e des moyens d'usinage de précision sans force 8 et leurs paramètres d'usinage sont gérés par le système de pilotage programmé de sorte que l'énergie appliquée à la pièce 2 lors de la deuxième phase d'usinage est inférieure d'au moins 40% à l'énergie appliquée à la pièce 2 lors de la première phase d'usinage, l'énergie appliquée à la pièce 2 lors de la deuxième phase d'usinage pouvant de préférence diminuer au fur et à mesure des interactions avec la matière afin d'avoir un enlèvement de matière très fin à chaque interaction avec la matière de la pièce et d'avoir une meilleure résolution d'usinage au cours de la deuxième phase.

Par exemple, pour le tournage électrochimique (ECM), les paramètres d'usinage modulables sont notamment la tension, le courant et la concentration en électrolyte. Pour le tournage par électroérosion, les paramètres d'usinage modulables sont notamment la tension et le courant.

Durant la première phase, les moyens d'usinage sans force, gérés par le système de pilotage 20 programmé à cet effet, travaillent sur la base des mêmes paramètres d'usinage, l'enlèvement de matière étant constant à chaque interaction avec la pièce, jusqu'à atteindre la surcote correspondant aux dimensions cibles de l'ébauche choisies pour être supérieures de 0.5% à 20% aux dimensions finales de la pièce 2. Les moyens d'usinage sans force, comme le laser, prennent comme références un point fixe extérieur à la pièce et la position connue de l'axe de rotation de la pièce, qui est constante vu que toute concentricité a été corrigée au départ, avant l'usinage, selon les étapes j) et k).

Dans le cas du femto-laser, il est choisi pour émettre un faisceau dont le diamètre est inférieur à 20 µm. Le système de pilotage desdits moyens de commande 20e des moyens d'usinage de précision sans force 8 est programmé pour commander le positionnement du faisceau pour interagir avec la matière de la pièce 2 de sorte que plus de 50% du diamètre du faisceau est utilisé lors de la première phase d'usinage et de sorte que moins de 50% du diamètre du faisceau est utilisé lors de la deuxième phase d'usinage.

Plus spécifiquement, lors de la première phase d'usinage, le faisceau se déplace parallèlement à l'axe de rotation de la pièce, tout en se rapprochant de l'axe de rotation de la pièce, plus de 50% du diamètre du faisceau étant utilisé pour interagir avec la matière de la pièce 2 pour disposer d'une énergie importante permettant d'enlever une quantité importante de matière. L'énergie appliquée à la pièce est sensiblement constante pendant la première phase d'usinage pour enlever la même quantité de matière à chaque interaction avec la pièce. Le laser s'arrête lorsqu'il atteint la surcote, la valeur de la surcote, entre 0.5% et 20% des dimensions finales de la pièce 2, étant choisie en fonction de la dimension du faisceau, du temps autorisé pour effectuer la deuxième phase, et de la rugosité Ra recherchée.

Entre la première et la deuxième phase, les paramètres d'usinage, tels que les paramètres de puissance sont modifiés par le système de pilotage programmé à cet effet, le femto-laser étant déplacé de manière à placer son point focal de sorte que moins de 50% du diamètre du faisceau est utilisé pour interagir avec la matière de la pièce 2. Une fois le laser positionné par ses moyens de commande 20b pilotés par le système de pilotage 20, il reste à une distance constante de l'axe de rotation de la pièce, tandis que le faisceau continue à être déplacé parallèlement à l'axe de rotation, en faisant des aller-retour. De ce fait, le faisceau touche de moins en moins de matière, avec très peu d'énergie, de sorte que très peu de matière est enlevé à chaque fois, et qu'on enlève de moins en moins de matière à chaque interaction du faisceau avec la pièce. Ainsi, le facteur de qualité du faisceau évolue, ce qui permet d'usiner des pièces aussi petites avec une aussi grande précision et une aussi faible rugosité Ra. La diminution progressive de la zone d'interaction au cours de la deuxième phase d'usinage permet de contrôler finement l'énergie d'usinage et d'obtenir des rugosités Ra extrêmes.

Par exemple, pour usiner une pièce ayant un diamètre de 100 µm avec un femto-laser ayant un diamètre de spot de 8 µm, on choisit une surcote de 2 µm, soit des dimensions cibles de l'ébauche atteintes à la fin de la première phase d'usinage supérieures de 2% au diamètre final. Pour la deuxième phase d'usinage, le femto-laser est positionné par rapport à l'ébauche par le système de pilotage 20 de sorte que 1/8 du faisceau laser est utilisé. On obtient une pièce finie présentant le diamètre recherché avec une rugosité Ra de 9 nm. Si on choisit une surcote de 1 µm, soit des dimensions cibles de l'ébauche atteintes à la fin de la première phase d'usinage supérieures de 1% au diamètre final, le femto-laser est positionné pour la deuxième phase d'usinage de sorte que 1/16 du faisceau laser est utilisé. On obtient une pièce finie présentant le diamètre recherché avec une rugosité Ra inférieure à 9 nm.

Si la mesure de l'ébauche prise par le système de mesure optique 22, 24 entre les première et deuxième phases d'usinage n'est pas conforme aux dimensions cibles, c'est-à-dire à la surcote choisie, suite à la comparaison avec les moyens de comparaison 20c, les paramètres d'usinage pour la deuxième phase sont corrigés par les moyens de correction 20d pour positionner le femto-laser par rapport à l'ébauche en tenant compte de la valeur réelle de la surcote.

La machine d'usinage 1 et le procédé d'usinage mis en œuvre par ladite machine d'usinage 1 selon l'invention permettent de réaliser un usinage selon deux phases d'usinage avec des mesures dimensionnelles *in situ* des pièces par des systèmes optiques incorporés aux broches entre les deux phases, les paramètres d'usinage étant modifiés entre les deux phases et éventuellement corrigés en fonction des résultats des mesures dimensionnelles des pièces, sans démonter la pièce de sa broche, permettant d'obtenir des pièces usinées dans des précisions extrêmes, inférieures ou égal à ± 1 µm, de préférence inférieures ou égal à ± 0.5 µm, et des rugosités Ra extrêmement faibles.

De plus, la machine d'usinage 1 et le procédé d'usinage mis en œuvre par ladite machine d'usinage 1 selon l'invention permettent, avant usinage, de mesurer par des systèmes optiques la concentricité de rotation de la pièce à usiner dans sa broche et de corriger la position radiale du dispositif de serrage de la pièce par rapport à l'axe de rotation de sa broche en fonction de la mesure de concentricité réalisée. La correction de la concentricité et l'usinage de la pièce se font au même endroit dans le même serrage, ce qui permet d'obtenir des pièces usinées présentant des qualités extrêmes de concentricité et de coaxialité.

Il est bien évident que le dispositif de correction de la concentricité 40 et les éléments nécessaires à son fonctionnement peut être utilisé dans une machine d'usinage pour recentrer le dispositif de serrage d'une pièce par rapport à sa broche.

## Revendications

1. Machine d'usinage (1) d'une pièce (2) présentant au moins une surface de révolution d'axe de rotation A, ladite machine d'usinage (1) comprenant des moyens d'usinage de précision sans force (8) agencés pour usiner la pièce, un tour (10) comprenant au moins une première broche (12) présentant un axe de rotation B s'étendant selon l'axe Z dans un repère XYZ, ladite première broche (12) étant mobile en translation selon l'axe Z et en rotation autour de son axe de rotation B, un premier dispositif de serrage (16) agencé pour serrer la pièce (2) à usiner et la monter sur la première broche (12), un premier système de mesure optique (22) de la pièce (2) intégré à la première broche (12) et agencé pour au moins mesurer les dimensions réelles de la pièce (2) lorsqu'elle est montée sur la première broche (12) au moyen du premier dispositif de serrage (16), et un système de pilotage (20) agencé pour gérer des paramètres d'usinage, le système de pilotage (20) comprenant :
- des moyens d'enregistrement (20a) de dimensions finales prédéterminées de la pièce à atteindre après usinage avec une tolérance prédéfinie,
- des moyens de commande (20b) du premier système de mesure optique (22) pour mesurer et enregistrer des dimensions réelles de la pièce (2) montée sur la première broche (12),
- des moyens de comparaison (20c) des dimensions réelles mesurées de la pièce (2) avec au moins les dimensions finales prédéterminées,
- des moyens de correction (20d) pour adapter les paramètres d'usinage en fonction de la comparaison des dimensions réelles mesurées de la pièce (2) avec au moins les dimensions finales prédéterminées,
- des moyens de commande (20e) des moyens d'usinage de précision sans force (8) pour usiner la pièce (2) en fonction des paramètres d'usinage,
**caractérisée en ce que** ledit système de pilotage (20) est agencé pour piloter lesdits moyens de commande (20b) du premier système de mesure optique (22), lesdits moyens de comparaison (20c), lesdits moyens de commande (20e) des moyens d'usinage de précision sans force (8), et éventuellement lesdits moyens de correction (20d), pour commander une première phase d'usinage de la pièce (2) montée sur la première broche (12) programmée pour obtenir une ébauche montée sur la première broche (12) dont les dimensions cibles sont supérieures de 0.5% à 20% aux dimensions finales prédéterminées de la pièce (2), puis pour réaliser au moins une mesure des dimensions réelles de l'ébauche montée sur la première broche (12) puis pour modifier les paramètres d'usinage des moyens de commande des moyens d'usinage de précision sans force pour commander, à partir de l'ébauche montée sur la première broche (12), une deuxième phase d'usinage par enlèvement de quantité de matière suffisamment faible pour obtenir la pièce (2) finie montée sur la première broche (12) présentant une rugosité Ra inférieure à 40 nm, de préférence inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées, les paramètres d'usinage pour la deuxième phase étant éventuellement corrigés en fonction de la comparaison des dimensions réelles mesurées de l'ébauche montée sur la première broche (12) avec les dimensions finales prédéterminées, le système de pilotage (20) étant en outre agencé pour piloter lesdits moyens de commande (20e) des moyens d'usinage de précision sans force (8) et leurs paramètres d'usinage de sorte que l'énergie appliquée à la pièce (2) lors de la deuxième phase d'usinage est inférieure d'au moins 40% à l'énergie appliquée à la pièce (2) lors de la première phase d'usinage, l'énergie appliquée à la pièce (2) lors de la deuxième phase d'usinage pouvant de préférence diminuer au fur et à mesure des interactions avec la matière.

2. Machine d'usinage selon la revendication 1, **caractérisée en ce que** le tour (10) comprend une deuxième broche (14) présentant un axe de rotation B' s'étendant selon l'axe Z en regard de la première broche (12), ladite deuxième broche (14) étant mobile en translation selon l'axe Z et en rotation autour de son axe de rotation B', **en ce que** la machine d'usinage (1) comprend un deuxième dispositif de serrage (18) agencé pour serrer la pièce (2) à usiner et la monter sur la deuxième broche (14) et un deuxième système de mesure optique (24) de la pièce (2) intégré à la deuxième broche (14) agencé pour au moins mesurer les dimensions réelles de la pièce (2) lorsqu'elle est montée sur la deuxième broche (14) au moyen du deuxième dispositif de serrage (18), le système de pilotage (20) comprenant des moyens de commande (20'b) du deuxième système de mesure optique (24) pour mesurer et enregistrer les dimensions réelles de la pièce (2) montée sur la deuxième broche (14) et étant agencé pour piloter lesdits moyens de commande (20'b) du deuxième système de mesure optique (24), lesdits moyens de comparaison (20c), lesdits moyens de commande (20e) des moyens d'usinage de précision sans force (8), et éventuellement lesdits moyens de correction (20d), pour commander une troisième phase d'usinage de la pièce (2) montée sur la deuxième broche (14) programmée pour obtenir une ébauche montée sur la deuxième broche (14) dont les dimensions cibles sont supérieures de 0.5 à 20% aux dimensions finales prédéterminées de la pièce (2), puis pour réaliser au moins une mesure des dimensions réelles de l'ébauche montée sur la deuxième broche (14) puis pour modifier les paramètres d'usinage des moyens de commande des moyens d'usinage de précision sans force pour commander, à partir de l'ébauche montée sur la deuxième broche (14), une quatrième phase d'usinage par enlèvement de quantité de matière suffisamment faible pour obtenir la pièce (2) finie montée sur la deuxième broche (14) présentant une rugosité Ra inférieure à 40 nm, de préférence inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées, les paramètres d'usinage pour la quatrième phase étant éventuellement corrigés en fonction de la comparaison des dimensions réelles mesurées de l'ébauche montée sur la deuxième broche (14) avec les dimensions finales prédéterminées.

3. Machine d'usinage selon l'une des revendications précédentes, **caractérisée en ce que** les moyens d'usinage de précision sans force (8) sont agencés pour attaquer la matière de la pièce (2) à usiner radialement et/ou tangentiellement et/ou axialement à ladite pièce (2).

4. Machine d'usinage selon l'une des revendications précédentes, **caractérisée en ce que** les moyens d'usinage de précision sans force (8) comprennent des moyens d'usinage par tournage par femto laser, par tournage électrochimique, ou par tournage par électroérosion.

5. Machine d'usinage selon la revendication 4, **caractérisée en ce que** les moyens d'usinage de précision sans force (8) sont des moyens d'usinage par tournage par femto laser agencés pour émettre un faisceau dont le diamètre est inférieur à 20 µm, et **en ce que** le système de pilotage est agencé pour piloter lesdits moyens de commande (20e) des moyens d'usinage de précision sans force (8) pour commander le positionnement du faisceau pour interagir avec la matière de la pièce (2) de sorte que plus de 50% du diamètre du faisceau est utilisé lors de la première phase d'usinage et de sorte que moins de 50% du diamètre du faisceau est utilisé lors de la deuxième phase d'usinage.

6. Machine d'usinage selon l'une des revendications précédentes, **caractérisée en ce que** le système de mesure optique (22, 24) comprend une optique télécentrique (26) associée à un éclairage télécentrique (28).

7. Machine d'usinage selon l'une des revendications précédentes, **caractérisée en ce que** le dispositif de serrage (16, 18) comprend un système de serrage par le vide de la pièce (2) à usiner.

8. Machine d'usinage selon l'une des revendications précédentes, **caractérisée en ce qu'**elle comprend un système de maintien par le vide (36) du dispositif de serrage (16, 18) sur sa broche respective (12, 14).

9. Machine d'usinage selon l'une des revendications précédentes, **caractérisée en ce que** le dispositif de serrage (16, 18) est agencé pour être maintenu sur sa broche respective (12, 14) selon l'axe Z et pour pouvoir être déplacé dans un plan X-Y au moins selon l'axe Y par une commande du système de pilotage (20).

10. Machine d'usinage selon la revendication 9, **caractérisée en ce que** le système de mesure optique (22, 24) de la pièce (2) est agencé pour mesurer la concentricité de la pièce (2) à usiner montée sur sa broche (12, 14) entre l'axe de rotation A et l'axe de rotation B, respectivement B' de la broche (12, 14), **en ce que** la machine d'usinage (1) comprend un dispositif de correction (40) de la concentricité associé à un dispositif de serrage (16, 18), ledit dispositif de correction (40) étant agencé pour pouvoir déplacer en translation son dispositif de serrage (16, 18) dans le plan X-Y selon l'axe Y, et **en ce que** le système de pilotage (20) est agencé pour commander un déplacement angulaire de la broche (12, 14) dans le plan X-Y et/ou pour commander un déplacement du dispositif de serrage (16, 18) en translation selon l'axe Y via son dispositif de correction (40) de sorte que les axes de rotation (A, B, B') de la pièce (2) à usiner et de sa broche (12, 14) soient confondus avant usinage.

11. Machine d'usinage selon la revendication 10, **caractérisée en ce que** le dispositif de correction (40) de la concentricité comprend une tringle (42) agencée pour pouvoir coopérer avec le dispositif de serrage associé (16, 18) et une came de correction (44) coopérant avec ladite tringle (42) et agencée pour être entrainée en rotation et commandée par le système de pilotage (20) pour déplacer ladite tringle (42) selon l'axe Y afin de déplacer le dispositif de serrage (16, 18) en translation selon l'axe Y en fonction de la concentricité à corriger.

12. Machine d'usinage selon l'une des revendications précédentes, **caractérisée en ce que** le système de mesure optique (22, 24) de la pièce (2) est agencé pour mesurer la rugosité réelle de la pièce (2) à usiner, et **en ce que** le système de pilotage (20) est agencé pour comparer ladite rugosité réelle avec une rugosité prédéterminée à atteindre, et pour modifier les paramètres d'usinage en fonction de la comparaison de la rugosité réelle de la pièce (2) avec la rugosité prédéterminée.

13. Machine d'usinage selon l'une des revendications précédentes, **caractérisée en ce que** les paramètres d'usinage comprennent les caractéristiques de fonctionnement des moyens d'usinage de précision sans force (8), la vitesse de rotation des broches (12, 14) et l'inclinaison des broches (12, 14).

14. Procédé d'usinage d'une pièce (2) présentant au moins une surface de révolution d'axe de rotation A au moyen d'une machine d'usinage (1) selon l'une des revendications 1 à 13, **caractérisé en ce que** ledit procédé comprend les étapes suivantes :
a) enregistrer des dimensions finales prédéterminées de la pièce à atteindre après usinage avec une tolérance prédéfinie ;
b) se munir d'une pièce (2) à usiner ;
c) monter la pièce (2) à usiner dans l'une des broches (12) de la machine d'usinage (1) au moyen de son dispositif de serrage (16);
d) usiner la pièce (2) montée sur sa broche (12) en rotation par les moyens d'usinage de précision sans force (8) selon la première phase d'usinage pour obtenir une ébauche montée sur sa broche (12) dont les dimensions cibles sont supérieures de 0.5 à 20% aux dimensions finales prédéterminées de la pièce (2);
e) mesurer les dimensions de la pièce (2) usinée selon la première phase d'usinage de l'étape précédente au moyen du système de mesure optique (22) de la première broche (12) pour obtenir des dimensions réelles mesurées de l'ébauche montée sur sa broche (12);
f) comparer les dimensions réelles mesurées à l'étape e) aux dimensions finales prédéterminées enregistrées à l'étape a) ;
g) modifier les paramètres d'usinage des moyens de commande des moyens d'usinage de précision sans force pour commander, à partir de l'ébauche montée sur sa broche (12), la deuxième phase d'usinage, les moyens de commande (20e) des moyens d'usinage de précision sans force (8) et leurs paramètres d'usinage étant pilotés par le système de pilotage (20) programmé de sorte que l'énergie appliquée à la pièce (2) lors de la deuxième phase d'usinage est inférieure d'au moins 40% à l'énergie appliquée à la pièce (2) lors de la première phase d'usinage, l'énergie appliquée à la pièce (2) lors de la deuxième phase d'usinage pouvant de préférence diminuer au fur et à mesure des interactions avec la matière ;
h) si les dimensions réelles mesurées à l'étape e) diffèrent des dimensions cibles de l'ébauche, corriger les paramètres d'usinage gérés par le système de pilotage (20) pour la deuxième phase d'usinage en fonction de la comparaison des mesures obtenues à l'étape f) ;
i) usiner l'ébauche montée sur sa broche (12) en rotation par les moyens d'usinage de précision sans force (8) en fonction des paramètres d'usinage modifiés à l'étape g), et éventuellement corrigés à l'étape h), selon la deuxième phase d'usinage, par enlèvement de quantité de matière suffisamment faible pour obtenir la pièce (2) finie montée sur la première broche (12) présentant une rugosité Ra inférieure à 40 nm, de préférence inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées.

15. Procédé d'usinage selon la revendication 14, **caractérisé en ce que** ledit procédé comprend, après usinage de la pièce sur l'une des broches (12), les étapes suivantes :
c') retirer la pièce usinée de l'une des broches (12) et la monter dans l'autre broche (14) de la machine d'usinage (1) au moyen de son dispositif de serrage (18);
d') usiner la pièce (2) montée sur sa broche (14) en rotation par les moyens d'usinage de précision sans force (8) selon la troisième phase d'usinage pour obtenir une ébauche montée sur sa broche (14) dont les dimensions cibles sont supérieures de 0.5 à 20% aux dimensions finales prédéterminées de la pièce (2);
e') mesurer les dimensions de la pièce (2) usinée selon la troisième phase d'usinage de l'étape précédente au moyen du système de mesure optique (24) de la deuxième broche (14) pour obtenir des dimensions réelles mesurées de l'ébauche montée sur sa broche (14) ;
f') comparer les dimensions réelles mesurées à l'étape e') aux dimensions finales prédéterminées enregistrées à l'étape a) ;
g') modifier les paramètres d'usinage des moyens de commande des moyens d'usinage de précision sans force pour commander, à partir de l'ébauche montée sur sa broche (14), la quatrième phase d'usinage ;
h') si les dimensions réelles mesurées à l'étape e') diffèrent des dimensions cibles de l'ébauche, corriger les paramètres d'usinage gérés par le système de pilotage pour la quatrième phase d'usinage en fonction de la comparaison des mesures obtenues à l'étape f') ;
i') usiner l'ébauche montée sur sa broche (14) en rotation par les moyens d'usinage de précision sans force (8) en fonction des paramètres d'usinage modifiés à l'étape g'), et éventuellement corrigés à l'étape h'), selon la quatrième phase d'usinage par enlèvement de quantité de matière suffisamment faible pour obtenir la pièce (2) finie montée sur la deuxième broche (14) présentant une rugosité Ra inférieure à 40 nm, de préférence inférieure ou égale à 12 nm, et plus préférentiellement strictement inférieure à 10 nm, et préférentiellement inférieure ou égale à 9 nm, et plus préférentiellement comprise entre 5 nm et 9 nm, bornes incluses, et ayant les dimensions finales prédéterminées.

16. Procédé d'usinage selon l'une des revendications 14 et 15, **caractérisé en ce qu'**il comprend, avant usinage selon l'étape d) ou d'), les étapes intermédiaires suivantes :
j) mesurer la concentricité de la pièce (2) à usiner montée sur sa broche (12, 14) entre l'axe de rotation A et l'axe de rotation (B , B') de la broche (12, 14) par le système de mesure optique associé (22, 24) à sa broche (12, 14) ;
k) corriger la concentricité de la pièce (2) à usiner par rapport à l'axe de rotation (B, B') de sa broche (12, 14) par déplacement de son dispositif de serrage (16, 18) de sorte que les axes de rotation (A, B, B') de la pièce (2) à usiner et de sa broche (12, 14) soient confondus.

17. Procédé d'usinage selon l'une des revendications 14 à 16, **caractérisé en ce que** les moyens d'usinage de précision sans force (8) comprennent des moyens d'usinage par tournage par femto laser, par tournage électrochimique, ou par tournage par électroérosion.

18. Procédé d'usinage selon la revendication 17, **caractérisé en ce que** les moyens d'usinage de précision sans force (8) sont des moyens d'usinage par tournage par femto laser agencés pour émettre un faisceau dont le diamètre est inférieur à 20 µm, et **en ce que** le système de pilotage desdits moyens de commande (20e) des moyens d'usinage de précision sans force (8) est programmé pour commander le positionnement du faisceau pour interagir avec la matière de la pièce (2) de sorte que plus de 50% du diamètre du faisceau est utilisé lors de la première phase d'usinage et de sorte que moins de 50% du diamètre du faisceau est utilisé lors de la deuxième phase d'usinage.

19. Procédé d'usinage selon l'une des revendication 14 à 18, **caractérisé en ce que** les paramètres d'usinage comprennent les caractéristiques de fonctionnement des moyens d'usinage de précision sans force (8), la vitesse de rotation des broches (12, 14) et l'inclinaison des broches (12, 14).

## Patentansprüche

1. Maschine zur Bearbeitung (1) eines Werkstücks (2) mit mindestens einer Rotationsfläche mit Drehachse A, wobei die besagte Maschine zur Bearbeitung (1) Präzisionsbearbeitungsmittel ohne Krafteinwirkung (8), die zur Bearbeitung des Werkstücks ausgelegt sind, eine Drehmaschine (10) umfassend mindestens eine erste Spindel (12) mit einer Drehachse B, die sich entlang der Z-Achse in einem XYZ-Bezugssystem erstreckt, wobei die besagte erste Spindel (12) entlang der Z-Achse translatorisch beweglich und um ihre Drehachse B drehbeweglich ist, eine erste Spannvorrichtung (16), die ausgelegt ist, um das zu bearbeitende Werkstück (2) zu spannen und es auf der ersten Spindel (12) zu montieren, ein erstes System zur optischen Messung (22) des Werkstücks (2), das in der ersten Spindel (12) integriert und ausgelegt ist, um mindestens die tatsächlichen Abmessungen des Werkstücks (2) zu messen, wenn es auf der ersten Spindel (12) mittels der ersten Spannvorrichtung (16) montiert ist, und ein Führungssystem (20), das zur Regelung von Bearbeitungsparametern ausgelegt ist, umfasst, wobei das Führungssystem (20) umfasst:
- Mittel zum Aufzeichnen (20a) von vorbestimmten Endabmessungen des Werkstücks, die nach Bearbeitung mit einer vorbestimmten Toleranz zu erreichen sind,
- Mittel zum Steuern (20b) des ersten Systems zur optischen Messung (22), um tatsächliche Abmessungen des auf der ersten Spindel (12) montierten Werkstücks (2) zu messen und aufzuzeichnen,
- Mittel zum Vergleichen (20c) der gemessenen tatsächlichen Abmessungen des Werkstücks (2) mit mindestens den vorbestimmten Endabmessungen,
- Mittel zum Korrigieren (20d), um die Bearbeitungsparameter entsprechend dem Vergleich der gemessenen tatsächlichen Abmessungen des Werkstücks (2) mit mindestens den vorbestimmten Endabmessungen anzupassen,
- Mittel zum Steuern (20e) der Präzisionsbearbeitungsmittel ohne Krafteinwirkung (8) zur Bearbeitung des Werkstücks (2) entsprechend den Bearbeitungsparametern, **dadurch gekennzeichnet, dass** das besagte Führungssystem (20) ausgelegt ist, um die besagten Mittel zum Steuern (20b) des ersten Systems zur optischen Messung (22), die besagten Mittel zum Vergleichen (20c), die besagten Mittel zum Steuern (20e) der Präzisionsbearbeitungsmittel ohne Krafteinwirkung (8) und eventuell die besagten Mittel zum Korrigieren (20d) zu führen, um eine erste Bearbeitungsstufe des auf der ersten Spindel (12) montierten Werkstücks (2) zu steuern, die programmiert ist, um einen auf der ersten Spindel (12) montierten Rohformling zu erhalten, dessen Zielabmessungen mehr als 0,5 % bis 20 % der vorbestimmten Endabmessungen des Werkstücks (2) betragen, um dann mindestens eine Messung der tatsächlichen Abmessungen des auf der ersten Spindel (12) montierten Rohformlings durchzuführen, um dann die Bearbeitungsparameter der Mittel zum Steuern der Präzisionsbearbeitungsmittel ohne Krafteinwirkung zu ändern, um ausgehend von dem auf der ersten Spindel (12) montierten Rohformling eine zweite Bearbeitungsstufe zu steuern, durch Abtrag von ausreichend geringer Materialmenge, um das auf der ersten Spindel (12) montierte fertige Werkstück (2) zu erhalten, aufweisend eine Rauheit Ra von weniger als 40 nm, vorzugsweise von weniger oder gleich 12 nm, und besonders bevorzugt von strikt weniger als 10 nm, und bevorzugt von weniger oder gleich 9 nm, und besonders bevorzugt zwischen einschliesslich 5 nm und einschliesslich 9 nm, und mit vorbestimmten Endabmessungen, wobei die Bearbeitungsparameter für die zweite Stufe entsprechend dem Vergleich der gemessenen tatsächlichen Abmessungen des auf der ersten Spindel (12) montierten Rohformlings mit den vorbestimmten Endabmessungen eventuell korrigiert werden, wobei das Führungssystem (20) des Weiteren ausgelegt ist, um die besagten Mittel zum Steuern (20e) der Präzisionsbearbeitungsmittel ohne Krafteinwirkung (8) und ihre Bearbeitungsparameter so zu führen, dass die während der zweiten Bearbeitungsstufe auf das Werkstück (2) angewandte Energie mindestens 40 % weniger als die während der ersten Bearbeitungsstufe auf das Werkstück (2) angewandte Energie beträgt, wobei die während der zweiten Bearbeitungsstufe auf das Werkstück (2) angewandte Energie vorzugsweise im Zuge der Interaktionen mit dem Material abnehmen kann.

2. Maschine zur Bearbeitung nach Anspruch 1, **dadurch gekennzeichnet, dass** die Drehmaschine (10) eine zweite Spindel umfasst (14), die eine Drehachse B' aufweist, die sich entlang der Z-Achse gegenüber der ersten Spindel (12) erstreckt, wobei die besagte zweite Spindel (14) entlang der Z-Achse translatorisch beweglich und um ihre Drehachse B' drehbeweglich ist, und dadurch, dass die Maschine zur Bearbeitung (1) eine zweite Spannvorrichtung (18), die ausgelegt ist, um das zu bearbeitende Werkstück (2) zu spannen und es auf der zweiten Spindel (14) anzubringen, und ein zweites System zur optischen Messung (24) des Werkstücks (2), das in der zweiten Spindel (14) integriert und ausgelegt ist, um mindestens die tatsächlichen Abmessungen des Werkstücks (2) zu messen, wenn es auf der zweiten Spindel (14) mittels der zweiten Spannvorrichtung (18) montiert ist, umfasst, wobei das Führungssystem (20) Mittel zum Steuern (20'b) des zweiten Systems zur optischen Messung (24) umfasst, um die tatsächlichen Abmessungen des auf der zweiten Spindel (14) montierten Werkstücks (2) zu messen und aufzuzeichnen, und ausgelegt ist, um die besagten Mittel zum Steuern (20'b) des zweiten Systems zur optischen Messung (24), die besagten Mittel zum Vergleichen (20c), die besagten Mittel zum Steuern (20e) der Präzisionsbearbeitungsmittel ohne Krafteinwirkung (8) und eventuell die besagten Mittel zum Korrigieren (20d) zu führen, um eine dritte Bearbeitungsstufe des auf der zweiten Spindel (14) montierten Werkstücks (2) zu steuern, die programmiert ist, um einen auf der zweiten Spindel (14) montierten Rohformling zu erhalten, dessen Zielabmessungen mehr als 0,5 bis 20 % der vorbestimmten Endabmessungen des Werkstücks (2) betragen, um dann mindestens eine Messung der tatsächlichen Abmessungen des auf der zweiten Spindel (14) montierten Rohformlings durchzuführen, um dann die Bearbeitungsparameter der Mittel zum Steuern der Präzisionsbearbeitungsmittel ohne Krafteinwirkung zu ändern, um ausgehend von dem auf der zweiten Spindel (14) montierten Rohformling eine vierte Bearbeitungsstufe zu steuern, durch Abtrag von ausreichend geringer Materialmenge, um das auf der zweiten Spindel (14) montierte fertige Werkstück (2) zu erhalten, aufweisend eine Rauheit Ra von weniger als 40 nm, vorzugsweise von weniger oder gleich 12 nm, und besonders bevorzugt von strikt weniger als 10 nm, und bevorzugt von weniger oder gleich 9 nm, und besonders bevorzugt zwischen einschliesslich 5 nm und einschliesslich 9 nm, und mit vorbestimmten Endabmessungen, wobei die Bearbeitungsparameter für die vierte Stufe entsprechend dem Vergleich der gemessenen tatsächlichen Abmessungen des auf der zweiten Spindel (14) montierten Rohformlings mit den vorbestimmten Endabmessungen eventuell korrigiert werden.

3. Maschine zur Bearbeitung nach einem der vorstehenden Ansprüche, **dadurch gekennzeichnet, dass** die Präzisionsbearbeitungsmittel ohne Krafteinwirkung (8) ausgelegt sind, um auf das Material des zu bearbeitenden Werkstücks (2) radial und/oder tangential und/oder axial zu dem besagten Werkstück (2) einzuwirken.

4. Maschine zur Bearbeitung nach einem der vorstehenden Ansprüche, **dadurch gekennzeichnet, dass** die Präzisionsbearbeitungsmittel ohne Krafteinwirkung (8) Mittel zur Bearbeitung durch Drehen durch Femto-Laser, durch elektrochemisches Drehen oder durch Drehen durch Elektroerosion umfassen.

5. Maschine zur Bearbeitung nach Anspruch 4, **dadurch gekennzeichnet, dass** die Präzisionsbearbeitungsmittel ohne Krafteinwirkung (8) Mittel zur Bearbeitung durch Drehen durch Femto-Laser sind, ausgelegt zum Aussenden eines Strahls, dessen Durchmesser weniger als 20 µm beträgt, und dadurch, dass das Führungssystem ausgelegt ist, um die besagten Mittel zum Steuern (20e) der Präzisionsbearbeitungsmittel ohne Krafteinwirkung (8) zu führen, um das Positionieren des Strahls zu steuern, um mit dem Material des Werkstücks (2) so zu interagieren, dass mehr als 50 % des Durchmessers des Strahls während der ersten Bearbeitungsstufe verwendet werden, und so, dass weniger als 50 % des Durchmessers des Strahls während der zweiten Bearbeitungsstufe verwendet werden.

6. Maschine zur Bearbeitung nach einem der vorstehenden Ansprüche, **dadurch gekennzeichnet, dass** das System zur optischen Messung (22, 24) eine telezentrische Optik (26) umfasst, die mit einer telezentrischen Beleuchtung (28) verbunden ist.

7. Maschine zur Bearbeitung nach einem der vorstehenden Ansprüche, **dadurch gekennzeichnet, dass** die Spannvorrichtung (16, 18) ein Vakuumspannsystem des zu bearbeitenden Werkstücks (2) umfasst.

8. Maschine zur Bearbeitung nach einem der vorstehenden Ansprüche, **dadurch gekennzeichnet, dass** sie ein Vakuumhaltesystem (36) der Spannvorrichtung (16, 18) auf ihrer jeweiligen Spindel (12, 14) umfasst.

9. Maschine zur Bearbeitung nach einem der vorstehenden Ansprüche, **dadurch gekennzeichnet, dass** die Spannvorrichtung (16, 18) ausgelegt ist, um auf ihrer jeweiligen Spindel (12, 14) entlang der Z-Achse gehalten zu werden, und um in einer XY-Ebene mindestens entlang der Y-Achse durch einen Steuerbefehl des Führungssystems (20) verschoben werden zu können.

10. Maschine zur Bearbeitung nach Anspruch 9, **dadurch gekennzeichnet, dass** das System zur optischen Messung (22, 24) des Werkstücks (2) ausgelegt ist, um die Rundlaufgenauigkeit des auf seiner Spindel (12, 14) montierten zu bearbeitenden Werkstücks (2) zwischen der Drehachse A und der Drehachse B beziehungsweise B' der Spindel (12, 14) zu messen, und dadurch, dass die Maschine zur Bearbeitung (1) eine mit einer Spannvorrichtung (16, 18) verbundene Vorrichtung zum Korrigieren (40) der Rundlaufgenauigkeit umfasst, wobei die besagte Vorrichtung zum Korrigieren (40) ausgelegt ist, um ihre Spannvorrichtung (16, 18) in der XY-Ebene entlang der Y-Achse translatorisch verschieben zu können, und dadurch, dass das Führungssystem (20) ausgelegt ist, um eine Winkelverschiebung der Spindel (12, 14) in der XY-Ebene zu steuern und/oder um eine Verschiebung der Spannvorrichtung (16, 18) translatorisch entlang der Y-Achse anhand ihrer Vorrichtung zum Korrigieren (40) so zu steuern, dass die Drehachsen (A, B, B') des zu bearbeitenden Werkstücks (2) und seiner Spindel (12, 14) vor Bearbeitung deckungsgleich sind.

11. Maschine zur Bearbeitung nach Anspruch 10, **dadurch gekennzeichnet, dass** die Vorrichtung zum Korrigieren (40) der Rundlaufgenauigkeit eine Stange (42) umfasst, die ausgelegt ist, um mit der verbundenen Spannvorrichtung (16, 18) zusammenwirken zu können, und einen Korrekturnocken (44), der mit der besagten Stange (42) zusammenwirkt und ausgelegt ist, um durch das Führungssystem (20) in Drehung versetzt und gesteuert zu werden, um die besagte Stange (42) entlang der Y-Achse zu verschieben, um die Spannvorrichtung (16, 18) entsprechend der zu korrigierenden Rundlaufgenauigkeit entlang der Y-Achse translatorisch zu verschieben.

12. Maschine zur Bearbeitung nach einem der vorstehenden Ansprüche, **dadurch gekennzeichnet, dass** das System zur optischen Messung (22, 24) des Werkstücks (2) ausgelegt ist, um die tatsächliche Rauheit des zu bearbeitenden Werkstücks (2) zu messen, und dadurch, dass das Führungssystem (20) ausgelegt ist, um die besagte tatsächliche Rauheit mit einer zu erreichenden vorbestimmten Rauheit zu vergleichen, und um die Bearbeitungsparameter entsprechend dem Vergleich der tatsächlichen Rauheit des Werkstücks (2) mit der vorbestimmten Rauheit zu ändern.

13. Maschine zur Bearbeitung nach einem der vorstehenden Ansprüche, **dadurch gekennzeichnet, dass** die Bearbeitungsparameter die Funktionsmerkmale der Präzisionsbearbeitungsmittel ohne Krafteinwirkung (8), die Drehgeschwindigkeit der Spindeln (12, 14) und die Neigung der Spindeln (12, 14) umfassen.

14. Bearbeitungsverfahren eines Werkstücks (2) mit mindestens einer Rotationsfläche mit Drehachse A mittels einer Maschine zur Bearbeitung (1) nach einem der Ansprüche 1 bis 13, **dadurch gekennzeichnet, dass** das besagte Verfahren die folgenden Schritte umfasst:
a) Aufzeichnen von vorbestimmten Endabmessungen des Werkstücks, die nach Bearbeitung mit einer vorbestimmten Toleranz zu erreichen sind;
b) Bereithalten eines zu bearbeitenden Werkstücks (2);
c) Montieren des zu bearbeitenden Werkstücks (2) in einer der Spindeln (12) der Maschine zur Bearbeitung (1) mittels seiner Spannvorrichtung (16);
d) Bearbeiten des auf seiner Spindel (12) montierten Werkstücks (2) im Rotationsverfahren durch die Präzisionsbearbeitungsmittel ohne Krafteinwirkung (8) gemäss der ersten Bearbeitungsstufe, um einen auf seiner Spindel (12) montierten Rohformling zu erhalten, dessen Zielabmessungen mehr als 0,5 bis 20 % der vorbestimmten Endabmessungen des Werkstücks (2) betragen;
e) Messen der Abmessungen des gemäss der ersten Bearbeitungsstufe des vorhergehenden Schrittes bearbeiteten Werkstücks (2) mittels des Systems zur optischen Messung (22) der ersten Spindel (12), um gemessene tatsächliche Abmessungen des auf seiner Spindel (12) montierten Rohformlings zu erhalten;
f) Vergleichen der im Schritt e) gemessenen tatsächlichen Abmessungen mit den im Schritt a) aufgezeichneten vorbestimmten Endabmessungen;
g) Ändern der Bearbeitungsparameter der Mittel zum Steuern der Präzisionsbearbeitungsmittel ohne Krafteinwirkung, um ausgehend von dem auf seiner Spindel (12) montierten Rohformling die zweite Bearbeitungsstufe zu steuern, wobei die Mittel zum Steuern (20e) der Präzisionsbearbeitungsmittel ohne Krafteinwirkung (8) und ihre Bearbeitungsparameter durch das Führungssystem (20) geführt werden, das so programmiert ist, dass die während der zweiten Bearbeitungsstufe auf das Werkstück (2) angewandte Energie mindestens 40 % niedriger als die während der ersten Bearbeitungsstufe auf das Werkstück (2) angewandte Energie ist, wobei die während der zweiten Bearbeitungsstufe auf das Werkstück (2) angewandte Energie vorzugsweise im Zuge der Interaktionen mit dem Material abnehmen kann;
h) falls die im Schritt e) gemessenen tatsächlichen Abmessungen von den Zielabmessungen des Rohformlings abweichen, Korrektur der durch das Führungssystem (20) für die zweite Bearbeitungsstufe erzeugten Bearbeitungsparameter in Abhängigkeit vom Vergleich der in Schritt f) erhaltenen Messungen;
i) Bearbeitung des auf seiner Spindel (12) montierten Rohformlings im Rotationsverfahren durch die Präzisionsbearbeitungsmittel ohne Krafteinwirkung (8) entsprechend den in Schritt g) geänderten und eventuell in Schritt h) korrigierten Bearbeitungsparametern, gemäss der zweiten Bearbeitungsstufe, durch Abtrag von ausreichend geringer Materialmenge, um das auf der ersten Spindel (12) montierte fertige Werkstück (2) zu erhalten, aufweisend eine Rauheit Ra von weniger als 40 nm, vorzugsweise von weniger oder gleich 12 nm, und besonders bevorzugt von strikt weniger als 10 nm, und bevorzugt von weniger oder gleich 9 nm, und besonders bevorzugt zwischen einschliesslich 5 nm und einschliesslich 9 nm, und mit vorbestimmten Endabmessungen.

15. Bearbeitungsverfahren nach Anspruch 14, **dadurch gekennzeichnet, dass** das besagte Verfahren nach Bearbeitung des Werkstücks auf einer seiner Spindeln (12) die folgenden Schritte umfasst:
c') Entnehmen des bearbeiteten Werkstücks aus einer der Spindeln (12) und Montieren von diesem in die andere Spindel (14) der Maschine zur Bearbeitung (1) mittels seiner Spannvorrichtung (18);
d') Bearbeiten des auf seiner Spindel (14) montierten Werkstücks (2) im Rotationsverfahren durch die Präzisionsbearbeitungsmittel ohne Krafteinwirkung (8) gemäss der dritten Bearbeitungsstufe, um einen auf seiner Spindel (14) montierten Rohformling zu erhalten, dessen Zielabmessungen mehr als 0,5 bis 20 % der vorbestimmten Endabmessungen des Werkstücks (2) betragen;
e') Messen der Abmessungen des gemäss der dritten Bearbeitungsstufe des vorhergehenden Schrittes bearbeiteten Werkstücks (2) mittels des Systems zur optischen Messung (24) der zweiten Spindel (14), um gemessene tatsächliche Abmessungen des auf seiner Spindel (14) montierten Rohformlings zu erhalten;
f) Vergleichen der im Schritt e') gemessenen tatsächlichen Abmessungen mit den im Schritt a) aufgezeichneten vorbestimmten Endabmessungen;
g') Ändern der Bearbeitungsparameter der Mittel zum Steuern der Präzisionsbearbeitungsmittel ohne Krafteinwirkung, um ausgehend von dem auf seiner Spindel (14) montierten Rohformling die vierte Bearbeitungsstufe zu steuern;
h') falls die im Schritt e') gemessenen tatsächlichen Abmessungen von den Zielabmessungen des Rohformlings abweichen, Korrektur der durch das Führungssystem für die vierte Bearbeitungsstufe erzeugten Bearbeitungsparameter in Abhängigkeit vom Vergleich der in Schritt f') erhaltenen Messungen;
i') Bearbeitung des auf seiner Spindel (14) montierten Rohformlings im Rotationsverfahren durch die Präzisionsbearbeitungsmittel ohne Krafteinwirkung (8) entsprechend den in Schritt g') geänderten und eventuell in Schritt h') korrigierten Bearbeitungsparametern, gemäss der vierten Bearbeitungsstufe durch Abtrag von ausreichend geringer Materialmenge, um das auf der zweiten Spindel (14) montierte fertige Werkstück (2) zu erhalten, aufweisend eine Rauheit Ra von weniger als 40 nm, vorzugsweise von weniger oder gleich 12 nm, und besonders bevorzugt von strikt weniger als 10 nm, und bevorzugt von weniger oder gleich 9 nm, und besonders bevorzugt zwischen einschliesslich 5 nm und einschliesslich 9 nm, und mit vorbestimmten Endabmessungen.

16. Bearbeitungsverfahren nach einem der Ansprüche 14 und 15, **dadurch gekennzeichnet, dass** es vor Bearbeitung nach Schritt d) oder d') die folgenden Zwischenschritte umfasst:
j) Messen der Rundlaufgenauigkeit des auf seiner Spindel (12, 14) montierten zu bearbeitenden Werkstücks (2) zwischen der Drehachse A und der Drehachse (B , B') der Spindel (12, 14) durch das mit seiner Spindel (12, 14) verbundene System zur optischen Messung (22, 24);
k) Korrigieren der Rundlaufgenauigkeit des zu bearbeitenden Werkstücks (2) in Bezug auf die Drehachse (B, B') seiner Spindel (12, 14) durch Verschieben seiner Spannvorrichtung (16, 18), sodass die Drehachsen (A, B, B') des zu bearbeitenden Werkstücks (2) und seiner Spindel (12, 14) deckungsgleich sind.

17. Bearbeitungsverfahren nach einem der vorstehenden Ansprüche 14 bis 16, **dadurch gekennzeichnet, dass** die Präzisionsbearbeitungsmittel ohne Krafteinwirkung (8) Mittel zur Bearbeitung durch Drehen durch Femto-Laser, durch elektrochemisches Drehen oder durch Drehen durch Elektroerosion umfassen.

18. Bearbeitungsverfahren nach Anspruch 17, **dadurch gekennzeichnet, dass** die Präzisionsbearbeitungsmittel ohne Krafteinwirkung (8) Mittel zur Bearbeitung durch Drehen durch Femto-Laser sind, ausgelegt zum Aussenden eines Strahls, dessen Durchmesser weniger als 20 µm beträgt, und dadurch, dass das Führungssystem der besagten Mittel zum Steuern (20e) der Präzisionsbearbeitungsmittel ohne Krafteinwirkung (8) programmiert ist, um das Positionieren des Strahls zu steuern, um mit dem Material des Werkstücks (2) so zu interagieren, dass mehr als 50 % des Durchmessers des Strahls während der ersten Bearbeitungsstufe verwendet werden, und so, dass weniger als 50 % des Durchmesser des Strahls während der zweiten Bearbeitungsstufe verwendet werden.

19. Bearbeitungsverfahren nach einem der Ansprüche 14 bis 18, **dadurch gekennzeichnet, dass** die Bearbeitungsparameter die Funktionsmerkmale der Präzisionsbearbeitungsmittel ohne Krafteinwirkung (8), die Drehgeschwindigkeit der Spindeln (12, 14) und die Neigung der Spindeln (12, 14) umfassen.

## Claims

1. A machine tool (1) for machining a piece (2) having at least one surface of revolution with axis of rotation A, said machine tool (1) comprising no-force precision machining means (8) arranged to machine the piece, a lathe (10) comprising at least one first spindle (12) having an axis of rotation B extending along the Z axis into an XYZ coordinate system, said first spindle (12) being movable in translation along the Z axis and in rotation around its axis of rotation B, a first clamping device (16) arranged to clamp the piece (2) to be machined and to mount it on the first spindle (12), a first optical measurement system (22) for the piece (2) integrated into the first spindle (12) and arranged to at least measure the actual dimensions of the piece (2) when it is mounted on the first spindle (12) using the first clamping device (16), and a guidance system (20) arranged to manage machining parameters, the guidance system (20) comprising:
- recording means (20a) for predetermined final dimensions of the piece to be achieved following machining with a predefined tolerance,
- control means (20b) for the first optical measurement system (22) in order to measure and record actual dimensions of the piece (2) mounted on the first spindle (12),
- comparison means (20c) for comparing the actual measured dimensions of the piece (2) with at least the predetermined final dimensions,
- correction means (20d) for adapting the machining parameters in accordance with the comparison of the actual measured dimensions of the piece (2) with at least the predetermined final dimensions,
- control means (20e) for the no-force precision machining means (8) in order to machine the piece (2) in accordance with the machining parameters,
**characterized in that** said guidance system (20) is arranged to guide said control means (20b) for the first optical measurement system (22), said comparison means (20c), said control means (20e) for the no-force precision machining means (8), and possibly, said correction means (20d), in order to control a first machining phase of the piece (2) mounted on the first spindle (12) that is programmed to obtain a blank mounted on the first spindle (12), of which the target dimensions are 0.5% to 20% greater than the predetermined final dimensions of the piece (2), and then to realize at least one measurement of the actual dimensions of the blank mounted on the first spindle (12) and then to modify the machining parameters of the control means for the no-force precision machining means in order to control, starting from the blank mounted on the first spindle (12), a second machining phase to remove a sufficiently small quantity of material in order to obtain the finished piece (2) mounted on the first spindle (12), having a roughness Ra of less than 40 nm, preferably less than or equal to 12 nm and, more preferably, strictly less than 10 nm and, preferably, less than or equal to 9 nm and, more preferably, between 5 nm and 9 nm, limits included, and having the predetermined final dimensions, the machining parameters for the second phase possibly being corrected in accordance with the comparison of the actual measured dimensions of the blank mounted on the first spindle (12) with the predetermined final dimensions, the guidance system (20) being also arranged to guide said control means (20e) for the no-force precision machining means (8) and their machining parameters such that the energy applied to the piece (2) during the second machining phase is at least 40% less than the energy applied to the piece (2) during the first machining phase, the energy applied to the piece (2) during the second machining phase preferably being able to decrease as the interactions with the material progress.

2. The machine tool according to Claim 1, **characterized in that** the lathe (10) comprises a second spindle (14) having an axis of rotation B' extending along the Z axis opposite the first spindle (12), said second spindle (14) being movable in translation along the Z axis and in rotation around its axis of rotation B', **in that** the machine tool (1) comprises a second clamping device (18) arranged to clamp the piece (2) to be machined and to mount it on the second spindle (14) and a second optical measurement system (24) for the piece (2) integrated into the second spindle (14) arranged to at least measure the actual dimensions of the piece (2) when it is mounted on the second spindle (14) using the second clamping device (18), the guidance system (20) comprising control means (20'b) for the second optical measurement system (24) in order to measure and record the actual dimensions of the piece (2) mounted on the second spindle (14) and being arranged to guide said control means (20'b) for the second optical measurement system (24), said comparison means (20c), said control means (20e) for the no-force precision machining means (8), and possibly said correction means (20d), in order to control a third machining phase of the piece (2) mounted on the second spindle (14) that is programmed to obtain a blank mounted on the second spindle (14), of which the target dimensions are 0.5% to 20% greater than the predetermined final dimensions of the piece (2), and then to realize at least one measurement of the actual dimensions of the blank mounted on the second spindle (14) and then to modify the machining parameters of the control means for the no-force precision machining means in order to control, starting from the blank mounted on the second spindle (14), a fourth machining phase to remove a sufficiently small quantity of material in order to obtain the finished piece (2) mounted on the second spindle (14), having a roughness Ra of less than 40 nm, preferably less than or equal to 12 nm and, more preferably, strictly less than 10 nm and, preferably, less than or equal to 9 nm and, more preferably, between 5 nm and 9 nm, limits included, and having the predetermined final dimensions, the machining parameters for the fourth phase possibly being corrected in accordance with the comparison of the actual measured dimensions of the blank mounted on the second spindle (14) with the predetermined final dimensions.

3. The machine tool according to any one of the preceding claims, **characterized in that** the no-force precision machining means (8) are arranged to strike the material of the piece (2) to be machined radially and/or tangentially and/or axially to said piece (2).

4. The machine tool according to any one of the preceding claims, **characterized in that** the no-force precision machining means (8) comprise means for machining by femto laser turning, by electrochemical turning, or electrical discharge turning.

5. The machine tool according to Claim 4, **characterized in that** the no-force precision machining means (8) are means for machining by femto laser turning arranged to emit a beam, the diameter of which is less than 20 µm, and **in that** the guidance system is arranged to guide said control means (20e) for the no-force precision machining means (8) to control the positioning of the beam in order to interact with the material of the piece (2) such that more than 50% of the diameter of the beam is used during the first machining phase and such that less than 50% of the diameter of the beam is used during the second machining phase.

6. The machine tool according to any one of the preceding claims, **characterized in that** the optical measurement system (22, 24) comprises telecentric optics (26) associated with telecentric lighting (28).

7. The machine tool according to any one of the preceding claims, **characterized in that** the clamping device (16, 18) comprises a vacuum clamping system for the piece (2) to be machined.

8. The machine tool according to any one of the preceding claims, **characterized in that** it comprises a vacuum holding system (36) for the clamping device (16, 18) on its respective spindle (12, 14).

9. The machine tool according to any one of the preceding claims, **characterized in that** the clamping device (16, 18) is arranged to be held on its respective spindle (12, 14) along the Z axis and to be able to be moved in a XY plane at least along the Y axis by a control from the guidance system (20).

10. The machine tool according to Claim 9, **characterized in that** the optical measurement system (22, 24) for the piece (2) is arranged to measure the concentricity of the piece (2) to be machined, mounted on its spindle (12, 14) between the axis of rotation A and the axis of rotation B, respectively B' of the spindle (12, 14), **in that** the machine tool (1) comprises a device (40) for correcting the concentricity associated with a clamping device (16, 18), said correction device (40) being arranged to be able to move its clamping device (16, 18) in translation in the XY plane along the Y axis, and **in that** the guidance system (20) is arranged to control an angular movement of the spindle (12, 14) in the XY plane and/or to control a movement of the clamping device (16, 18) in translation along the Y axis via its correction device (40) such that the axes of rotation (A, B, B') of the piece (2) to be machined and of its spindle (12, 14) coincide prior to machining.

11. The machine tool according to Claim 10, **characterized in that** the device for correcting (40) the concentricity comprises a rod (42) arranged to be able to cooperate with the associated clamping device (16, 18) and a correction cam (44) cooperating with said rod (42) and arranged to be driven in rotation and controlled by the guidance system (20) in order to move said rod (42) along the Y axis in order to move the clamping device (16, 18) in translation along the Y axis in accordance with the concentricity to be corrected.

12. The machine tool according to any one of the preceding claims, **characterized in that** the optical measurement system (22, 24) for the piece (2) is arranged to measure the actual roughness of the piece (2) to be machined, and **in that** the guidance system (20) is arranged to compare said actual roughness with a predetermined roughness to be achieved, and to modify the machining parameters in accordance with the comparison of the actual roughness of the piece (2) with the predetermined roughness.

13. The machine tool according to any one of the preceding claims, **characterized in that** the machining parameters comprise the operating characteristics of the no-force precision machining means (8), the rotational speed of the spindles (12, 14) and the inclination of the spindles (12, 14).

14. A method for machining a piece (2) having at least one surface of revolution with axis of rotation A using a machine tool (1) according to any one of Claims 1 to 13, **characterized in that** said method comprises the following steps:
a) recording predetermined final dimensions of the piece to be achieved following machining with a predefined tolerance;
b) providing a piece (2) to be machined;
c) mounting the piece (2) to be machined in one of the spindles (12) of the machine tool (1) using its clamping device (16);
d) machining the piece (2) mounted on its spindle (12) in rotation by the no-force precision machining means (8) according to the first machining phase in order to obtain a blank mounted on its spindle (12), of which the target dimensions are 0.5% to 20% greater than the predetermined final dimensions of the piece (2);
e) measuring the dimensions of the piece (2) machined according to the first machining phase of the preceding step using the optical measurement system (22) for the first spindle (12) in order to obtain actual measured dimensions of the blank mounted on its spindle (12);
f) comparing the actual dimensions measured in step e) with the predetermined final dimensions recorded in step a);
g) modifying the machining parameters of the control means for the no-force precision machining means in order to control, starting from the blank mounted on its spindle (12), the second machining phase, the control means (20e) for the no-force precision machining means (8) and their machining parameters being guided by the guidance system (20) that is programmed such that the energy applied to the piece (2) during the second machining phase is at least 40% less than the energy applied to the piece (2) during the first machining phase, the energy applied to the piece (2) during the second machining phase preferably being able to decrease as the interactions with the material progress;
h) if the actual dimensions measured in step e) differ from the target dimensions of the blank, correcting the machining parameters managed by the guidance system (20) for the second machining phase in accordance with the comparison of the measurements obtained in step f);
i) machining the blank mounted on its spindle (12) in rotation by the no-force precision machining means (8) in accordance with the machining parameters modified in step g), and possibly corrected in step h), according to the second machining phase, to remove a sufficiently small quantity of material in order to obtain the finished piece (2) mounted on the first spindle (12), having a roughness Ra of less than 40 nm, preferably less than or equal to 12 nm and, more preferably, strictly less than 10 nm and, preferably, less than or equal to 9 nm and, more preferably, between 5 nm and 9 nm, limits included, and having the predetermined final dimensions.

15. The machining method according to Claim 14, **characterized in that** said method comprises, following machining of the piece on one of the spindles (12), the following steps:
c') withdrawing the machined piece from one of the spindles (12) and mounting it in the other spindle (14) of the machine tool (1) using its clamping device (18);
d') machining the piece (2) mounted on its spindle (14) in rotation by the no-force precision machining means (8) according to the third machining phase in order to obtain a blank mounted on its spindle (14), of which the target dimensions are 0.5% to 20% greater than the predetermined final dimensions of the piece (2);
e') measuring the dimensions of the piece (2) machined according to the third machining phase of the preceding step using the optical measurement system (24) for the second spindle (14) in order to obtain actual measured dimensions of the blank mounted on its spindle (14);
f') comparing the actual dimensions measured in step e') with the predetermined final dimensions recorded in step a);
g') modifying the machining parameters of the control means for the no-force precision machining means in order to control, starting from the blank mounted on its spindle (14), the fourth machining phase;
h') if the actual dimensions measured in step e') differ from the target dimensions of the blank, correcting the machining parameters managed by the guidance system for the fourth machining phase in accordance with the comparison of the measurements obtained in step f');
i') machining the blank mounted on its spindle (14) in rotation by the no-force precision machining means (8) in accordance with the machining parameters modified in step g'), and possibly corrected in step h'), according to the fourth machining phase to remove a sufficiently small quantity of material in order to obtain the finished piece (2) mounted on the second spindle (14), having a roughness Ra of less than 40 nm, preferably less than or 12 nm and, more preferably, strictly less than 10 nm and, preferably, less than or equal to 9 nm and, more preferably, between 5 nm and 9 nm, limits included, and having the predetermined final dimensions.

16. The machining method according to any one of Claims 14 and 15, **characterized in that** it comprises, prior to machining according to step d) or d'), the following intermediate steps:
j) measuring the concentricity of the piece (2) to be machined, mounted on its spindle (12, 14) between the axis of rotation A and the axis of rotation (B, B') of the spindle (12, 14) by the optical measurement system (22, 24) associated with its spindle (12, 14);
k) correcting the concentricity of the piece (2) to be machined with respect to the axis of rotation (B, B') of its spindle (12, 14) by moving its clamping device (16, 18) such that the axes of rotation (A, B, B') of the piece (2) to be machined and of its spindle (12, 14) coincide.

17. The machining method according to any one of Claims 14 to 16, **characterized in that** the no-force precision machining means (8) comprise means for machining by femto laser turning, by electrochemical turning, or electrical discharge turning.

18. The machining method according to Claim 17, **characterized in that** the no-force precision machining means (8) are means for machining by femto laser turning arranged to emit a beam, the diameter of which is less than 20 µm, and **in that** the guidance system of said control means (20e) for the no-force precision machining means (8) is programmed to control the positioning of the beam in order to interact with the material of the piece (2) such that more than 50% of the diameter of the beam is used during the first machining phase and such that less than 50% of the diameter of the beam is used during the second machining phase.

19. The machining method according to any one of Claims 14 to 18, **characterized in that** the machining parameters comprise the operating characteristics of the no-force precision machining means (8), the rotational speed of the spindles (12, 14) and the inclination of the spindles (12, 14).
